# EUROPÄISCHE PATENTSCHRIFT

(11) **EP 3 887 016 B1**
(45) Veröffentlichungstag und Bekanntmachung des Hinweises auf die Patenterteilung: **15.06.2022**
(21) Anmeldenummer: 18814818.3
(22) Anmeldetag: 28.11.2018
(51) Int. Cl.: B01D 19/04, C11D 3/00, C11D 3/04, C11D 3/20, C11D 3/37, D21H 17/59, D21H 21/12, D21C 3/28

(54) **ENTSCHÄUMERFORMULIERUNGEN ENTHALTEND ORGANOPOLYSILOXANE**
DEFOAMING FORMULATIONS CONTAINING ORGANOPOLYSILOXANES
FORMULATIONS ANTIMOUSSES CONTENANT DES ORGANOPOLYSILOXANES

(43) Veröffentlichungstag der Anmeldung: 06.10.2021
(73) Patentinhaber: Wacker Chemie AG, 81737 München (DE)
(72) Erfinder: GRANDL, Markus, 81825 München (DE); DECKERT, Christoph, 84489 Burghausen (DE); HÖLZLWIMMER, Elisabeth, 84359 Simbach (DE); SAGE, Corinna, 84547 Emmerting (DE); WIMMER, Josef, 84489 Burghausen (DE)
(74) Vertreter: Deffner-Lehner, Maria
(86) Internationale Anmeldenummer: PCT/EP2018/082902
(87) Internationale Veröffentlichungsnummer: WO 2020/108752

(56) Entgegenhaltungen:
- EP-A1- 1 167 502
- EP-A1- 2 846 891
- EP-A2- 0 434 060
- EP-B1- 2 846 891
- CN-A- 106 474 777
- JP-A- H08 196 811

## Beschreibung

Die Erfindung betrifft Entschäumerformulierungen enthaltend Organopolysiloxane und deren Verwendung als Entschäumer, insbesondere in wässrigen Tensidsystemen.

In vielen flüssigen, insbesondere wässrigen Systemen, die als erwünschte oder auch unerwünschte Bestandteile oberflächenaktive Verbindungen enthalten, können durch Schaumbildung Probleme auftreten, wenn diese Systeme in mehr oder weniger intensiven Kontakt mit gasförmigen Stoffen gebracht werden, beispielsweise beim Begasen von Abwässern, beim intensiven Rühren von Flüssigkeiten, bei Destillations-, Wasch- oder Färbeprozessen oder bei Abfüllvorgängen.

Die Bekämpfung dieses Schaums kann auf mechanischem Wege oder durch den Zusatz von Entschäumern erfolgen. Dabei haben sich Entschäumer auf Siloxanbasis besonders bewährt.

Die Verbesserung der Wirksamkeit von Entschäumern auf Siloxanbasis ist dabei ein ständiger Prozess. Eine Vielzahl wissenschaftlicher Arbeiten (beispielsweise Denkov et al. Langmuir, 1999, 15, 8514, Langmuir, 1999, 15, 8530 oder zusammengefasst in P. Garrett, The science of defoaming, CRC Press, 2014, Chapter 4.5 "Oil Bridges and Antifoam Mechanism", v.a. S. 152 ff.) beschäftigen sich so mit dem Antischaum-Mechanismus, wobei bei Entschäumern auf Siloxanbasis der sogenannte Bridging-Stretching-Mechanismus favorisiert wird. Dieser Mechanismus beruht darauf, dass der siloxanbasierte Entschäumer in der Schaumlamelle zuerst eine Brücke (Bridge) ausbildet, deren Zerreißen dann zur Zerstörung der Schaumlamelle führt. Eine ausreichend geringe Viskosität wie auch eine gute Spreitungsfähigkeit der Entschäumer ist somit notwendig, damit in der Schaumlamelle eine Brücke (Bridge) ausgebildet werden kann.

Im Laufe des Verbesserungsprozesses der siloxanbasierten Entschäumer zielten viele Arbeiten auf die Erhöhung der Geschwindigkeit der Ausbildung dieser Entschäumerbrücke, somit auf die Erhöhung der sofortigen Wirksamkeit (auch Schaum-Knockdown bezeichnet) von Entschäumern. Hier konnten durch die Inkorporierung hydrophober Füllstoffe, insbesondere Kieselsäuren, deutliche Effizienzsteigerungen erzielt werden. Die Inkorporierung kann dabei durch die Verteilung von (vor-)hydrophobierter Kieselsäure in ein Polydimethylsiloxan, z. B. gemäß DE 29 25 722 A, geschehen. Alternativ kann auch eine (in-situ) Hydrophobierung erfolgen, z. B. durch Erhitzen von in Polydimethylsiloxanen verteilter hydrophiler Kieselsäure, z. B. gemäß US 3,383,327 A, oder durch Anwendung basischer Katalysatoren (US 3,560,401 A).

Eine weitere Wirkungssteigerung kann erfolgen, wenn der Entschäumer auf Siloxanbasis neben einem Polydiorganosiloxan und Kieselsäure noch ein Copolymer aus (CH₃)₃SiO_{1/2}- und SiO₂-Bausteinen enthält, wie es z. B. in US 4,145,308 A beschrieben ist.

Ebenso ist durch Zusatz von Polyether-Polysiloxan-Copolymeren eine Wirkungssteigerung Silicon-basierter Entschäumer ebenfalls möglich. In US 7,105,581 B1 sind Antischaummittel auf Basis von Polyether-Polysiloxan-Copolymeren beschrieben. Bei diesen zugesetzten Copolymeren handelt es sich um Tenside.

Typische Silicon-basierte Entschäumerzusammensetzungen können somit Polysiloxane, Füllstoffe wie hydrophobisierte Kieselsäuren, Copolymere aus (CH₃)₃SiO_{1/2}- und SiO₂-Bausteinen und Polyether-Polysiloxan-Copolymere enthalten.

Hauptaugenmerk der letzten Jahre war die Erhöhung der Langzeitwirkung von Entschäumern auf Siloxanbasis. Dieser Aspekt wurde in einer Reihe wissenschaftlicher Artikel untersucht (z. B. Denkov et al., Langmuir, 2000, 16, 2515 oder Marinova et al. und Langmuir, 2003, 19, 3084). Der Verlust an Wirkung nach einer gewissen Anwendungszeit wird darin als "Antifoam Exhaustion" oder auch "Antischaum-Deaktivierung" bezeichnet und auf eine Reihe von Effekten zurückgeführt, wie beispielsweise der Verringerung der Partikelgröße der Antischaum-Globuli, oder die Emulgierung des sich auf der Oberfläche befindenden Antischaummittels, oder der Segregation von Polydimethylsiloxan und Kieselsäure in zwei verschiedene Populationen an Antischaum-Globuli (Kieselsäure-verarmt und Kieselsäure-angereichert).

Um diesen Effekten entgegenzuwirken und damit die Langzeitwirkung zu steigern, wurde in den letzten Jahrzehnten die Verwendung von anvernetzten oder zum Teil bereits gummiähnlichen Polydimethylsiloxanen als Teil eines Entschäumers vorgeschlagen, um dem Entschäumer ein elastisches Moment zu verleihen.

Derartige anvernetzte oder zum Teil bereits gummiähnliche Polydimethylsiloxane wurden beispielsweise durch das Inkorporieren von Silsesquioxan-Einheiten in das Polydimethylsiloxan (via Co-Hydrolyse) (US 2,632,736 A), durch das Inkorporieren eines Alkoxysilans oder eines Copolymeren aus (CH₃)₃SiO_{1/2}- und SiO₂-Bausteinen in das Polydimethylsiloxan (via Äquilibrierung und/oder Kondensation)(EP 163 541 A2 und EP 217 501 A2) oder durch radikalische Vernetzung von Polydimethylsiloxanen (z. B. DE 3805661 A1 und EP 273 448 A2) hergestellt. Alternativ wurde die Herstellung anvernetzter und verzweigter Siloxane durch Umsetzung von endständig vinylhaltigen Siloxanen mit Si-H funktionellen Siloxanen im Sinne einer Hydrosilylierung vorgeschlagen (z. B. EP 434 060 A2, EP 516 109 A1, DE 44 44 175 A1 und GB 2257709 A1).

Allerdings sind diese Verfahren sehr unspezifisch, oftmals wenig reproduzierbar und liefern häufig schlecht handhabbare Produkte, da sie nahe bei dem Gelierpunkt arbeiten. Diese Verfahren werden somit auch entweder in einem inerten Polysiloxan oder in Gegenwart eines hohen Überschusses einer der Reaktionspartner (in der Regel der vinylhaltigen Komponente) als Lösemittel durchgeführt. Auch wurden gezielt hochvernetzte oder gar gelierte Produkte hergestellt, die dann aber wiederum der besseren Handhabbarkeit wegen mit einem größeren Überschuss an linearen Polysiloxanen kombiniert werden (z. B. EP 499 364 A1).

Die Charakterisierung der anvernetzten oder zum Teil bereits gummiähnlichen Polydimethylsiloxane erfolgt häufig durch Methoden, die aus der Elastomercharakterisierung bekannt sind, wie z. B. die Penetrationstiefe (EP 434 060 A2), den Weißenberg-Effekt (DE 38 05 661 A1) oder auch der rheologischen Charakterisierung. Beispielsweise werden in EP 499 364 A1 Entschäumer geliert oder in einer Emulsion geliert und die Elastomereigenschaft über den Verlustfaktor (tan delta) sowie den dynamischen Elastizitätsmodul (G') bei einer Frequenz von 10 Hertz und 25°C und einer Amplitude von < 2% charakterisiert. Gemäß WO 2011/069868 A2 werden Siloxan-basierten Entschäumern durch das Inkorporieren von Polysiloxanen sehr hoher Viskosität (> 1 Mio mPas) ein elastischer Moment verliehen, was durch die Bestimmung des Verlustfaktors (tan delta) bei 1 Hertz und einer Amplitude von 1% beschrieben wird. EP 2846891 A1 offenbart Entschäumerformulierungen auf der Basis von Organopolysiloxanen und deren Verwendung in wässrigen Tensidsystemen.

Ein Nachteil bei der Verwendung der anvernetzten oder zum Teil gummiähnlichen Polydimethylsiloxane ist, dass solche Formulierungen mit zunehmender Lagerdauer des Entschäumercompounds einen starken Anstieg der Viskosität zeigen. Entschäumerformulierungen die Polyether-Polysiloxan-Copolymere enthalten zeigen den beschriebenen Anstieg der Viskosität deutlich schneller als Formulierungen ohne den Zusatz.

Dies wirkt sich nachteilig auf deren Handhabung, insbesondere auf deren Fließfähigkeit, Dosierbarkeit und Emulgierbarkeit aus.

Es bestand die Aufgabe, Entschäumerformulierungen auf Basis von Siloxanen bereitzustellen, die sowohl eine hohe Lagerstabilität, insbesondere eine weitestgehend konstante Viskosität über einen Zeitraum von mehreren Wochen, als auch eine hohe Effizienz bei der Entschäumung, nicht nur direkt nach deren Herstellung sondern auch nach deren Lagerung, aufweisen.

Gegenstand der Erfindung sind Entschäumerformulierungen enthaltend:
(1) Organopolysiloxane enthaltend pro Molekül mindestens eine Struktureinheit der allgemeinen Formel

   O_{1/2}R₂Si-Y-SiRO_{2/2} (I)

   und mindestens 2 Einheiten der allgemeinen Formel

   R¹R₂SiO_{1/2} (II)

   und Einheiten der allgemeinen Formel

   R₂SiO_{2/2} (III),

   wobei
   - R: gleich oder verschieden sein kann und einen einwertigen SiC-gebundenen Kohlenwasserstoffrest mit 1 bis 30 C-Atomen, der ein oder mehrere voneinander getrennte O-Atome enthalten kann und der frei von aliphatischen Kohlenstoff-Kohlenstoff-Mehrfachbindungen ist, bedeutet und
   - R¹: gleich R oder ein Alkenylrest mit 2 bis 30 C-Atomen, vorzugsweise ein Methyl- oder ein Vinylrest ist, wobei mindestens ein Alkenylrest pro Molekül enthalten ist,
   - Y: einen zweiwertigen Kohlenwasserstoffrest mit 2 bis 30 C-Atomen bedeutet,
   mit der Maßgabe, dass das Organopolysiloxan ein Strukturelement der Formel

   R₂Y²SiO-(SiR₂O)ₓ₁-SiRY¹O-(SiR₂O)ₓ₂-SiR₂R¹ (IV)

   enthält, wobei
   - R und R¹: die oben dafür angegebene Bedeutung haben,
   - Y¹: einen zweiwertigen Kohlenwasserstoffrest mit 2 bis 30 C-Atomen, der an eine Gruppe der Formel SiR₂O_{1/2} gebunden ist, bedeutet,
   - Y²: einen zweiwertigen Kohlenwasserstoffrest mit 2 bis 30 C-Atomen, der an eine Gruppe der Formel SiRO_{2/2} gebunden ist, bedeutet und
   - x₁ und x₂: gleich 0 oder eine ganze Zahl ist, mit der Maßgabe, dass die Summe x₁+x₂=x ist, wobei x durchschnittlich größer 5, vorzugsweise größer 10, und kleiner 100, vorzugsweise kleiner 80, bevorzugt kleiner 60, ist.
(2) Füllstoffe,
(3) Organopolysiloxanharze aus Einheiten der allgemeinen Formel

   R²ₑ(R³O)_{f}SiO_{(4-e-f)/2} (V),

   worin
   - R²: gleich oder verschieden sein kann und ein Wasserstoffatom oder einen einwertigen, gegebenenfalls substituierten, SiC-gebundenen Kohlenwasserstoffrest mit 1 bis 30 C-Atomen bedeutet,
   - R³: gleich oder verschieden sein kann und ein Wasserstoffatom oder einen einwertigen, gegebenenfalls substituierten Kohlenwasserstoffrest mit 1 bis 4 C-Atomen bedeutet,
   - e: 0, 1, 2 oder 3 ist und
   - f: 0, 1, 2 oder 3 ist, mit der Maßgabe, dass die Summe e+f kleiner oder gleich 3 ist und in weniger als 50 % aller Einheiten der Formel (V) im Organopolysiloxanharz die Summe e+f gleich 2 ist,
(4) polyethylenoxidhaltige Tenside und
(5) anorganische oder organische Säuren.
   Die erfindungsgemäßen Entschäumerformulierungen können als weitere Bestandteile gegebenenfalls
(6) Polyorganosiloxane der allgemeinen Formel R⁵R₂SiO(SiR₂O)ₘSiR₂R⁵ (VIIa) oder 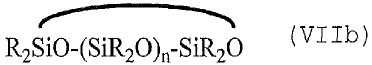 wobei
   - R: gleich oder verschieden sein kann und die oben dafür angegebene Bedeutung hat,
   - R⁵: gleich oder verschieden sein kann und R oder -OR⁶ sein kann, wobei
   - R⁶: ein Wasserstoffatom oder einen einwertigen, gegebenenfalls substituierten Kohlenwasserstoffrest mit 1 bis 25 C-Atomen bedeutet,
   - m: eine ganze Zahl ist, vorzugsweise von 1 bis 2500 ist, bevorzugt m so gewählt ist, dass die Polyorganosiloxane der Formel (VIIa) bei 25°C und 101,425 kPa eine Viskosität von 10 bis 1 000 000 mPa·s haben,
   - n: eine ganze Zahl ist, vorzugsweise von 2 bis 20 ist, bevorzugt n so gewählt ist, dass die Polyorganosiloxane der Formel (VIIb) bei 25°C und 101,425 kPa eine Viskosität von 2 bis 15 mPa·s haben, wobei die Polyorganosiloxane auch geringe Anteile an Verzweigungen, vorzugsweise T-Einheiten (R⁵SiO_{3/2}) und Q-Einheiten (SiO₂), enthalten können, gegebenenfalls
(7) wasserunlösliche organische Verbindungen, gegebenenfalls
(8) polyethermodifizierte Polysiloxane, welche linear oder verzweigt sein können und mindestens eine Polyethergruppe enthalten
   und gegebenenfalls
(9) alkalische oder saure Katalysatoren oder deren
   Umsetzungsprodukte mit den Komponenten (1) bis (8), enthalten.

Organopolysiloxane (1) sind die Hauptkomponenten in den erfindungsgemäßen Entschäumerformulierungen und liegen daher in einer größeren Menge vor als jede weitere Komponente (2) bis (9) .

### Vorzugsweise enthalten die Entschäumerformulierungen

(1) mindestens 30 Gew.-%, bevorzugt mindestens 40 Gew.-%, besonders bevorzugt mindestens 50 Gew.-%, und vorzugsweise höchstens 97 Gew.-%, bevorzugt höchstens 90 Gew.-%, besonders bevorzugt höchstens 85 Gew.-%, Organopolysiloxane,
(2) mindestens 1 Gew.-%, bevorzugt mindestens 2 Gew.-%, besonders bevorzugt mindestens 3 Gew.-%, und vorzugsweise höchstens 15 Gew.-%, bevorzugt höchstens 12 Gew.-%, besonders bevorzugt höchstens 10 Gew.-%, Füllstoffe,
(3) mindestens 1 Gew.-%, bevorzugt mindestens 2 Gew.-%, besonders bevorzugt mindestens 3 Gew.-%, und vorzugsweise höchstens 15 Gew.-%, bevorzugt höchstens 12 Gew.-%, besonders bevorzugt höchstens 10 Gew.-%, Organopolysiloxanharze aus Einheiten der Formel (V),
(4) mindestens 0,01 Gew.-%, bevorzugt höchstens 10 Gew.-%, besonders bevorzugt höchstens 5 Gew.-% eines polyethylenoxidhaltigen Tensids,
(5) mindestens 0,01 Gew.-%, bevorzugt höchstens 3 Gew.-%, besonders bevorzugt höchstens 1 Gew.-% einer anorganischen oder organischen Säure,
(6) mindestens 0 Gew.-%, bevorzugt mindestens 3 Gew.-%, besonders bevorzugt mindestens 5 Gew.-%, und vorzugsweise höchstens 40 Gew.-%, bevorzugt höchstens 30 Gew.-%, besonders bevorzugt höchstens 20 Gew.-%, Polyorganosiloxane der allgemeinen Formel (VIIa) oder (VIIb),
(7) mindestens 0 Gew.-% und vorzugsweise höchstens 15 Gew.-%, bevorzugt höchstens 10 Gew.-%, besonders bevorzugt höchstens 7,5 Gew.-%, wasserunlösliche organische Verbindungen,
(8) mindestens 0 Gew.-% und vorzugsweise höchstens 15 Gew.-%, bevorzugt höchstens 10 Gew.-%, besonders bevorzugt höchstens 7,5 Gew.-%, polyethermodifizierte Polysiloxane, welche linear oder verzweigt sein können und mindestens eine Polyethergruppe tragen, und
(9) mindestens 0 Gew.-%, bevorzugt mindestens 0,05 Gew.-%, besonders bevorzugt mindestens 0,1 Gew.-%, und vorzugsweise höchstens 1 Gew.-%, bevorzugt höchstens 0,5 Gew.-%, besonders bevorzugt höchstens 0,3 Gew.-%, alkalische oder saure Katalysatoren oder deren Umsetzungsprodukte mit den Komponenten (1) bis (8),
   jeweils bezogen auf das Gesamtgewicht der Entschäumerformulierungen.

Vorzugsweise bestehen die Entschäumerformulierungen aus den Komponenten (1) bis (5) und ggf. (6) und ggf. (7) und ggf. (8) und ggf. (9).

Vorzugsweise handelt es sich bei den in den Entschäumerformulierungen eingesetzten Organopolysiloxanen (1) um Organopolysiloxane herstellbar indem,
(A) oligomere oder polymere Organosiliciumverbindungen, die Einheiten der allgemeinen Formel

   R¹R₂SiO_{1/2} (II),

   Einheiten der allgemeinen Formel

      R₂SiO_{2/2} (III) ,

      und Einheiten der allgemeinen Formel

      HRSiO_{2/2} (VIII)
   enthalten, wobei
   R und R¹ die oben dafür angegebene Bedeutung haben, mit der Maßgabe, dass
   mindestens ein Alkenylrest R¹ pro Molekül enthalten ist, die Summe der Einheiten HRSiO_{2/2} und R¹R₂SiO_{1/2} durchschnittlich größer als 2,0 ist,
   und die Anzahl der Alkenylreste R¹ durchschnittlich größer ist als die Anzahl der Si-gebundenen Wasserstoffatome, und gegebenenfalls
(B) oligomere oder polymere Organosiliciumverbindungen, die
   Einheiten der allgemeinen Formel

      R⁷R₂SiO_{1/2} (IX)

      und
   Einheiten der allgemeinen Formel

      R₂SiO_{2/2} (III)
   enthalten, wobei
   R die oben dafür angegebene Bedeutung aufweist und,
   R⁷ ein Alkenylrest mit 2 bis 30 C-Atomen, vorzugsweise ein Vinylrest ist,
      in Gegenwart von
(C) die Anlagerung von Si-gebundenem Wasserstoff an aliphatische Doppelbindung fördernde Katalysatoren
   umgesetzt werden,
   wobei das eingesetzte Verhältnis von aliphatischer Doppelbindung in den Komponenten (A) und gegebenenfalls (B) zu Si-gebundenem Wasserstoff in der Komponente (A) 1,2 bis 10, vorzugsweise 1,5 bis 5,0, bevorzugt 1,7 bis 3,0, beträgt.

Vorzugsweise handelt es sich bei den zur Herstellung der in den Entschäumerformulierungen verwendeten Organopolysiloxane (1) eingesetzten oligomeren oder polymeren Organosiliciumverbindungen (A) um solche der Formel

R¹R₂SiO-(SiR₂O)ₓ-(HSiR)_{y}-O-SiR₂R¹ (X)

,
wobei
R, R¹ und x die oben dafür angegebene Bedeutung aufweisen, und y durchschnittlich mindestens 0,5, bevorzugt mindestens 0,6, besonders bevorzugt mindestens 0,7, und durchschnittlich höchstens 1,5, bevorzugt höchstens 1,2 und besonders bevorzugt höchstens 1,0, ist,
mit der Maßgabe, dass mindestens ein Alkenylrest R¹ pro Molekül enthalten ist,
die Summe der Einheiten HRSiO_{2/2} und R¹R₂SiO_{1/2} durchschnittlich größer als 2,0 ist,
und die Anzahl der Alkenylreste R¹ durchschnittlich größer ist als die Anzahl der Si-gebundenen Wasserstoffatome.

Vorzugsweise handelt es sich bei den zur Herstellung der in der Entschäumerformulierung verwendeten Organopolysiloxane (1) gegebenenfalls eingesetzten oligomeren oder polymeren Organosiliciumverbindungen (B) um solche der Formel

R⁷R₂SiO-(SiR₂O)_{z}O-SiR₂R⁷ (XI),

wobei R und R⁷ die oben dafür angegebene Bedeutung haben und z durchschnittlich größer 5, vorzugsweise größer 10, und kleiner 1000, vorzugsweise kleiner 500, besonders bevorzugt kleiner 250, ist.

Beispiele für Kohlenwasserstoffreste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentyl- und der 2-Ethylhexylrest, Nonylreste, wie der n-Nonylrest, Decylreste, wie der n-Decylrest, Dodecylreste, wie der n-Dodecylrest, Tetradecylreste, wie der n-Tetradecylrest, Hexadecylreste, wie der n-Hexadecylrest und Octadecylreste, wie der n-Octadecylrest; Cycloalkylreste, wie der Cyclopentyl-, Cyclohexyl-, Cycloheptyl-, Methylcyclohexyl- und 4-Ethylcyclohexylrest; Arylreste, wie der Phenyl-, Naphthyl-, Anthryl- und Phenanthrylrest; Alkarylreste, wie o-, m-, p-Tolylreste, Xylylreste und Ethylphenylreste; und Aralkylreste, wie der Benzylrest und der α- und der β-Phenylethylrest.

Die Kohlenwasserstoffreste R können Ether- oder Polyethergruppen enthalten.

Bevorzugte Beispiele für R sind Methyl-, Ethyl- und Phenylreste. Ein besonders bevorzugtes Beispiel ist der Methylrest.

Wenn R¹ die Bedeutung von R hat, gelten für R¹ die oben für R angegebenen Beispiele ebenso wie die für R angegebenen bevorzugten Beispiele.

Wenn R¹ ein Alkenylrest ist, sind Beispiele für Alkenylreste R¹ der Vinyl-, Allyl- und 3-Butenyl-, 5-Hexenyl-, 7-Octenyl-, 9-Decenyl- und der 11-Dodecenylrest, wobei der Vinyl- und der 5-Hexenylrest bevorzugt sind und der Vinylrest besonders bevorzugt ist.

Vorzugsweise enthalten die Organopolysiloxane (1) durchschnittlich mehr als zwei Alkenylreste R¹.

Vorzugsweise ist Y ein zweiwertiger Kohlenwasserstoffrest mit 1 bis 12 C-Atomen, besonders bevorzugt mit 2 C-Atomen, wobei der Rest der Formel -CH₂CH₂- besonders bevorzugt ist.

Vorzugsweise sind Y¹ und Y² jeweils ein zweiwertiger Kohlenwasserstoffrest mit 1 bis 12 C-Atomen, besonders bevorzugt mit 2 C-Atomen, wobei der Rest der Formel -CH₂CH₂-besonders bevorzugt ist.

Beispiele für Y in der Struktureinheit (I), sowie Y¹ und Y² in der Struktureinheit (IV) sind solche der Formel -CH₂CH₂-, -CH(CH₃)-, -(CH₂)₄-, -(CH₂)₅-, -(CH₂)₆-, -(CH₂)₈-, -(CH₂)₁₀-, -(CH₂)₁₂-, wobei die Reste der Formel -CH₂CH₂-, -CH(CH₃)-, -(CH₂)₆- und -(CH₂)₈- bevorzugt sind und der Rest der Formel -CH₂CH₂- besonders bevorzugt ist.

Y sowie Y¹ und Y² können auch ungesättigt sein. Beispiele hierfür sind Reste der Formel -CH=CH- (cis oder trans) und - C(=CH₂)-.

Bei den erfindungsgemäßen Organopolysiloxanen (1) ist ein bevorzugtes Beispiel für eine Einheit der Formel (II) die Trimethylsiloxaneinheit sowie die Vinyldimethylsiloxaneinheit, wobei insbesondere mindestens eine Vinyldimethylsiloxaneinheit pro Molekül enthalten ist.

Bevorzugte Beispiele für Einheiten der Formel (III) sind Dimethylsiloxaneinheiten.

Vorzugsweise bedeutet R² einen Kohlenwasserstoffrest mit 1 bis 30 Kohlenstoffatomen.

Beispiele für Kohlenwasserstoffreste R gelten im vollen Umfang für Kohlenwasserstoffreste R².

Bevorzugte Beispiele für Reste R² sind der Methyl-, Ethyl- und Phenylrest.

Beispiele für Reste R³ sind das Wasserstoffatom und Alkylreste, wie der Methyl-, Ethyl-, n-Propyl-, iso-Propyl- und n-Butylrest.

Bevorzugt ist der Rest R³ ein Wasserstoffatom oder ein Methyl- oder Ethylrest.

Beispiele für Reste R⁶ sind das Wasserstoffatom und Alkylreste, wie der Methyl-, Ethyl-, n-Propyl-, iso-Propyl- und n-Butylrest sowie Isotridecyl-, n-Octyl, Stearyl-, 4-Ethyl-hexadecyl-, 2-Octyl-1-dodecyl- oder Eicosanylrest.

Bevorzugt ist der Rest R⁶ ein Wasserstoffatom oder ein C₁-C₂₅-Alkylrest, wie ein Methyl-, Ethyl- oder 2-Octyl-1-dodecylrest.

Bevorzugte Beispiele für Reste R⁵ sind der Methyl-, Ethyl- und Phenylrest und der Hydroxy-, Methoxy-, Ethoxy- und 2-Octyl-1-dodecyloxyrest.

Gegebenenfalls eingesetzte Polyorganosiloxane der Formel (VIIa) mit R⁵ gleich einem Rest -OR⁶ sind beispielsweise durch alkalisch katalysierte Kondensation von silanolterminierten Polydimethylsiloxanen und aliphatischen Alkoholen, wie Isotridecylalkohol, n-Octanol, Stearylalkohol, 4-Ethylhexadecanol, 2-Octyl-1-dodecanol oder Eicosanol, zugänglich.

Beispiele für Reste R⁷ sind der Vinyl-, Allyl- und 3-Butenyl-, 5-Hexenyl-, 7-Octenyl-, 9-Decenyl- und der 11-Dodecenylrest, wobei der Vinyl- und der 5-Hexenylrest bevorzugt sind und der Vinylrest besonders bevorzugt ist.

Die Viskosität der in den erfindungsgemäßen Entschäumerformulierungen eingesetzten Organopolysiloxane (1) beträgt vorzugsweise mindestens 50 mPa·s, bevorzugt mindestens 500 mPa·s, und vorzugsweise höchstens 10 000 mPa·s, bevorzugt höchstens 5000 mPa·s, jeweils bei 25°C und 101,425 kPa.

Organopolysiloxane (1) können auch in geringem Umfang, vorzugsweise 0 bis 1 Mol %, insbesondere 0 bis 0,02 Mol %, bezogen auf die Summe aller Siloxaneinheiten, andere Siloxaneinheiten, wie RSiO_{1/2} (T)-Einheiten oder SiO₂ (Q)-Einheiten (wobei R die oben dafür angegebene Bedeutung hat) enthalten.

Organopolysiloxane (1) und Verfahren zu ihrer Herstellung sind beispielsweise beschrieben in US 6,258,913 B1, insbesondere Spalte 11, Zeile 6 bis Spalte 12, Zeile 50 (incorporated by reference).

Es kann eine Art von Organopolysiloxan (1) oder ein Gemisch aus mindestens zwei Arten von Organopolysiloxanen (1) eingesetzt werden.

Bei den Organosiliciumverbindungen (A), die zur Herstellung der in der erfindungsgemäßen Entschäumerformulierung eingesetzten Organopolysiloxane (1) verwendet werden, ist ein bevorzugtes Beispiel für eine Einheit der Formel (II) die Trimethylsiloxaneinheit sowie die Vinyldimethylsiloxaneinheit, wobei insbesondere mindestens eine Vinyldimethylsiloxaneinheit pro Molekül enthalten ist.

Bevorzugte Beispiele für Einheiten der Formel (III) sind Dimethylsiloxaneinheiten.

Ein bevorzugtes Beispiel für eine Einheit der Formel (VIII) ist die Hydrogenmethylsiloxaneinheit.

Organosiliciumverbindungen (A), wie die der Formel (X), werden beispielsweise hergestellt durch Äquilibrieren von Organopolysiloxanen mit endständigen Einheiten der Formel R¹R₂SiO_{1/2} mit Organopolysiloxanen mit Si-gebundenen Wasserstoffatomen in HRSiO_{2/2}-Einheiten, wobei R und R¹ die oben dafür angegebene Bedeutung haben.

Die Organosiliciumverbindung (A) besitzt vorzugsweise eine Viskosität von 5 bis 150 mPas bei 25°C.

Bei den Organosiliciumverbindungen (B), die gegebenenfalls zur Herstellung der in den erfindungsgemäßen Entschäumerformulierungen eingesetzten Organopolysiloxane (1) verwendet werden, ist ein bevorzugtes Beispiel für eine Einheit der Formel (IX) die Vinyldimethylsiloxaneinheit.

Bevorzugte Beispiele für Einheiten der Formel (III) sind Dimethylsiloxaneinheiten.

Organosiliciumverbindungen (B) insbesondere nach der Formel (XI) sind bekannt und werden durch Äquilibrieren von Organopolysiloxanen mit endständigen Einheiten der Formel R⁷R₂SiO_{1/2} mit cyclischen Organopolysiloxanen oder HO- oder alkoxy-terminierten Organopolysiloxanen mit Einheiten der Formel R₂SiO hergestellt, wobei R und R⁷ die oben dafür angegebene Bedeutung haben.

Die Organosiliciumverbindung (B) besitzt vorzugsweise eine Viskosität von 5 bis 100.000 mPa·s bei 25°C.

Als die Anlagerung von Si-gebundenem Wasserstoff an aliphatische Doppelbindung fördernde Katalysatoren (C) können auch bei dem erfindungsgemäßen Verfahren die gleichen Katalysatoren eingesetzt werden, die auch bisher zur Förderung der Anlagerung von Si-gebundenem Wasserstoff an aliphatische Doppelbindung eingesetzt werden konnten.

Bei den Katalysatoren (C) handelt es sich vorzugsweise um ein Metall aus der Gruppe der Platinmetalle oder um eine Verbindung oder einen Komplex aus der Gruppe der Platinmetalle. Beispiele für solche Katalysatoren sind metallisches und feinverteiltes Platin, das sich auf Trägern, wie Siliciumdioxid, Aluminiumoxid oder Aktivkohle befinden kann, Verbindungen oder Komplexe von Platin, wie Platinhalogenide, z. B. PtCl₄, H₂PtCl₆.6H₂O, Na₂PtCl₄.4H₂O, Platin-Olefin-Komplexe, Platin-Alkohol-Komplexe, Platin-Alkoholat-Komplexe, Platin-Ether-Komplexe, Platin-Aldehyd-Komplexe, Platin-Keton-Komplexe, einschließlich Umsetzungsprodukten aus H₂PtCl₆.6H₂O und Cyclohexanon, Platin-Vinylsiloxankomplexe, wie Platin-1,3-Divinyl-1,1,3,3-tetramethyldisiloxan-komplexe mit oder ohne Gehalt an nachweisbarem anorganisch gebundenem Halogen, Bis-(gamma-picolin)-platindichlorid, Trimethylendipyridinplatindichlorid, Dicyclopentadienplatindichlorid, Dimethylsulfoxydethylenplatin-(II)-dichlorid, Cycloactadien- Platindichlorid, Norbornadien-Platindichlorid, Gamma-picolin- Platindichlorid, Cyclopentadien-Platindichlorid, sowie Umsetzungsprodukte von Platintetrachlorid mit Olefin und primärem Amin oder sekundärem Amin oder primärem und sekundärem Amin gemäß US-A 4,292,434, wie das Umsetzungsprodukt aus in 1-Octen gelöstem Platintetrachlorid mit sec.-Butylamin, oder Ammonium-Platinkomplexe gemäß EP-B 110 370.

Der Katalysator (C) wird vorzugsweise in Mengen von 1 bis 100 Gew.-ppm (Gewichtsteilen je Million Gewichtsteilen), bevorzugt in Mengen von 4 bis 20 Gew.-ppm, jeweils berechnet als elementares Platin und bezogen auf das Gesamtgewicht der Komponenten (A) und gegebenenfalls (B), verwendet.

Das Verfahren zur Herstellung der in der erfindungsgemäßen Entschäumerformulierung verwendeten Organopolysiloxane (1) wird vorzugsweise beim Druck der umgebenden Atmosphäre, also etwa bei 1020 hPa (abs.), durchgeführt, es kann aber auch bei höheren oder niedrigeren Drücken durchgeführt werden.

Ferner wird das Verfahren vorzugsweise bei einer Temperatur von 50°C bis 180°C, bevorzugt 60°C bis 140°C, durchgeführt.

Bei dem Herstellungsverfahren können inerte, organische Lösungsmittel mitverwendet werden, obwohl die Mitverwendung von inerten, organischen Lösungsmitteln nicht bevorzugt ist. Beispiele für inerte, organische Lösungsmittel sind Toluol, Xylol, Octanisomere, Butylacetat, 1,2-Dimethoxyethan, Tetrahydrofuran und Cyclohexan.

Die gegebenenfalls mitverwendeten inerten organischen Lösungsmittel werden anschließend destillativ entfernt.

Hochpolymere Produkte bleiben bevorzugt im inerten Lösungsmittel gelöst.

Vorzugsweise weisen die in den erfindungsgemäßen Entschäumerformulierungen eingesetzten Füllstoffe (2) eine BET-Oberfläche von 20 bis 1000 m²/g auf. Vorzugsweise weisen die Füllstoffe (2) eine Partikelgröße von weniger als 10 µm und eine Agglomeratgröße von weniger als 100 µm auf.

Beispiele für Füllstoffe (2) sind Siliciumdioxid (Kieselsäuren), Titandioxid, Aluminiumoxid, Metallseifen, Quarzmehl, PTFE-Pulver, Fettsäureamide, z. B. Ethylenbisstearamid, und fein verteilte hydrophobe Polyurethane.

Vorzugsweise werden als Füllstoffe (2) Siliciumdioxid (Kieselsäuren), Titandioxid oder Aluminiumoxid mit einer BET-Oberfläche von 20 bis 1000 m²/g eingesetzt. Vorzugsweise weisen diese Füllstoffe eine Partikelgröße von weniger als 10 µm und eine Agglomeratgröße von weniger als 100 µm auf.

Bevorzugt als Füllstoffe (2) sind Kieselsäuren, insbesondere solche mit einer BET-Oberfläche von 50 bis 800 m²/g. Diese Kieselsäuren können pyrogene oder gefällte Kieselsäuren sein. Es sind als Füllstoffe (2) sowohl vorbehandelte Kieselsäuren einsetzbar, also hydrophobe Kieselsäuren, als auch hydrophile Kieselsäuren. Beispiele für handelsübliche hydrophobe Kieselsäuren, die erfindungsgemäß eingesetzt werden können, sind HDK^{®} H2000, eine pyrogene mit Hexamethyldisilazanen behandelte Kieselsäure mit einer BET-Oberfläche von 140 m²/g (käuflich erhältlich bei der Wacker Chemie AG, Deutschland) und eine gefällte mit Polydimethylsiloxan behandelte Kieselsäure mit einer BET-Oberfläche von 90 m²/g (käuflich erhältlich unter der Bezeichnung "Sipernat D10" bei der Degussa AG, Deutschland).

Hydrophile Kieselsäuren können auch in situ hydrophobiert werden, wenn das für die gewünschte Wirksamkeit der Entschäumerformulierung vorteilhaft ist. Verfahren zur Hydrophobierung von Kieselsäuren sind vielfach bekannt. Die in situ Hydrophobierung der hydrophilen Kieselsäure kann dabei z. B. durch mehrstündiges Erhitzen der in der Komponente (1) oder (6) oder in einer Mischung aus den Komponenten (1), (3) und gegebenenfalls (6) und gegebenenfalls (7) dispergierten Kieselsäure auf Temperaturen von 100 bis 200°C erfolgen. Dabei kann die Reaktion durch den Zusatz von Katalysatoren, wie KOH, und von Hydrophobiermitteln, wie kurzkettigen OH-terminierten Polydimethylsiloxanen, Silanen oder Silazanen unterstützt werden.

Bei der in den erfindungsgemäßen Entschäumerformulierungen eingesetzten Komponente (3) handelt es sich um Siliconharze aus Einheiten der Formel (V), bei denen vorzugsweise in weniger als 30%, bevorzugt in weniger als 5%, der Einheiten im Harz die Summe e+f gleich 2 ist.

Bevorzugt handelt es sich bei den Organopolysiloxanharzen (3) aus Einheiten der Formel (V) um MQ-Harze aus Einheiten der Formeln

SiO₂ (Q-Einheiten) und

R²₃SiO_{1/2} (M-Einheiten) ,

wobei R² die oben dafür angegebene Bedeutung hat.

Das molare Verhältnis von M- zu Q-Einheiten liegt dabei vorzugsweise im Bereich von 0,5 bis 2,0, bevorzugt im Bereich von 0,6 bis 1,0. Neben den M- und Q-Einheiten können die MQ-Harze gegebenenfalls noch geringe Mengen an R²SiO_{3/2} oder (R³O)SiO_{3/2} (T)-Einheiten oder R²₂SiO_{2/2} (D)-Einheiten, in Mengen von vorzugsweise 0,01 bis 20 Mol%, bevorzugt 0,01 bis 5 Mol %, bezogen auf die Summe aller Siloxaneinheiten, enthalten, wobei R³ die oben dafür angegebene Bedeutung hat. Diese MQ-Harze können außerdem bis zu 10 Gew.-% freie Si-gebundene Hydroxy- oder Alkoxygruppen, wie Methoxy- oder Ethoxygruppen, enthalten.

Vorzugsweise haben diese Organopolysiloxanharze (3) bei 25°C und 101,425 kPa eine Viskosität größer 1000 mPa·s oder sind Feststoffe. Das mit Gelpermeationschromatografie bestimmte gewichtsmittlere Molekulargewicht (bezogen auf einen Polystyrolstandard) dieser Harze beträgt vorzugsweise 200 bis 200 000 g/mol, insbesondere 1000 bis 20 000 g/mol.

Beispiele für in den erfindungsgemäßen Entschäumerformulierungen gegebenenfalls eingesetzte Polyorganosiloxane (6) sind Polydimethylsiloxane der Formel (VIIa) mit einer Viskosität von 10 bis 1.000.000 mPa·s bzw. cyclische Polydimethylsiloxane der Formel (VIIb) mit einer Viskosität von 2 bis 15 mPa·s, jeweils bei 25°C und 101,425 kPa.

Obwohl in Formel (VIIa) nicht angegeben, können diese Polyorganosiloxane (6) 0 bis 1 Mol %, vorzugsweise 0 bis 0,02 Mol %, bezogen auf die Summe aller Siloxaneinheiten, andere Siloxaneinheiten, wie RSiO_{3/2} (T)-Einheiten oder SiO₂ (Q)-Einheiten (wobei R die oben dafür angegebene Bedeutung hat) enthalten.

Beispiele für die erfindungsgemäßen nichtionischen, polyethylenoxidhaltigen Tenside (4) sind:
- Alkylpolyglycolether, vorzugsweise mit Alkylresten von 8 bis 20 C-Atomen, wie z. B. Steareth-100 (9005-00-9), Talloweth-50, Talloweth-80 (61791-28-4), Trideceth-50 (24938-91-8), Isotrideceth-5, Isotrideceth-6, Isotrideceth-8 (69011-36-5), Isotrideceth-16,
- Carbonsäurepolyglycolester, insbesondere Fettsäurepolyglycolester, vorzugsweise solche Carbonsäurerestern von 8 bis 20 C-Atomen, wie z. B. PEG-75 Oleat, PEG-200 Oleat, PEG-300 Monooleat, PEG-400 Oleat, PEG-150 Laurat, PEG-400 Laurat, PEG-75 Stearat, PEG-100 Stearat, PEG-600 Stearat, PEG-150 Distearat,
- Ethoxylierte Sorbitanfettsäureester, wie z.B. PEG-40 Sorbitanoleat, PEG-80 Sorbitanlaurat,
- Ethoxyliertes Rizinusöl oder hydrierte Varianten, wie z.B. (Bezeichnung nach INCI-Nomenklatur) PEG 75 Castor Oil oder PEG200 Castor Oil bzw. PEG-80 hydrogenated Castor Oil, PEG-100 hydrogenated Castor Oil, PEG-200 hydrogenated Castor Oil.
- Ethoxylierte Fettamine, wie z.B. PEG-100 Talg-alkylamin (61791-44-4), PEG-40 Stearylamin,
- Ethoxylierte Glyceryl Fettsäurecarboxylate, wie z.B. PEG-40 Glyceryllaurat, PEG-200 Glycerylstearat, PEG-200 Glyceryltallowat, PEG-200 hydriertes Glycerylpalmat
- Blockcopolymere aus Ethylenoxid- und Propylenoxid-Einheiten (Polyalkylenblockpolymere wie die sogenannten Poloxamere), wie z.B. PEG-PPG-PEG-Blockpolymer Pluronic^{®} F-108 (HLB >24; Mₙ ≈ 14600) (erhältlich bei Sigma-Aldrich),
- Copolymere aus Ethylenoxid- und Propylenoxid-Einheiten, die über einen Ethylendiamin-Kern verbrückt sind (sogenannte Poloxamine), wie z.B. Tetronic 1107 (HLB-Wert: 24; Mₙ ≈ 15000) (erhältlich bei Sigma-Aldrich).

Als polyethylenoxidhaltige Tenside (4) werden vorzugsweise Alkylpolyglycolether eingesetzt.

Bevorzugt sind Alkylpolyglycolether der Formel

**R⁴-[O-CH₂-CH₂]ₙ-OH** (VI),

worin
- R⁴: einen einwertigen Kohlenwasserstoffrest mit 1 bis 30 C-Atomen, vorzugsweise 4 bis 30 C-Atome, insbesondere 10 bis 20 C-Atome, bedeutet und
- n: ganzzahlige Werte zwischen 1 und 100, vorzugsweise zwischen 3 und 20, bevorzugt zwischen 3 und 10 aufweist.

Beispiele für die Kohlenwasserstoffreste R⁴ sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentyl- und der 2-Ethylhexylrest, Nonylreste, wie der n-Nonylrest, Decylreste, wie der n-Decylrest, Dodecylreste, wie der n-Dodecylrest, Tridecylreste, wie der n-Tridecylrest oder der iso-Tridecylrest, Tetradecylreste, wie der n-Tetradecylrest, Hexadecylreste, wie der n-Hexadecylrest und Octadecylreste, wie der n-Octadecylrest; Cycloalkylreste, wie der Cyclopentyl-, Cyclohexyl-, Cycloheptyl-, Methylcyclohexyl- und 4-Ethylcyclohexylrest.

Bevorzugte Beispiele für R⁴ sind Dodecylreste, wie der n-Dodecylrest und Tridecylreste, wie der iso-Tridecylrest.

Die erfindungsgemäßen nicht-ionischen, polyethylenoxidhaltigen Tenside (4) können aus einem der o.g. Tensiden oder aus einem Gemisch zweier oder mehrerer o.g. Tensiden bestehen, wobei sie in reiner Form oder als Lösungen eines oder mehrerer

Emulgatoren in Wasser oder organischen Lösungsmitteln eingesetzt werden können.

Bei den erfindungsgemäß eingesetzten Säuren (5) kann es sich um anorganische oder organische Säuren in reiner Form oder verdünnt als wässrige oder organische Lösung handeln. Als "organische Säuren" sind alle organischen Verbindungen mit einem oder mehreren Kohlenstoffatomen definiert die eine oder mehrere Säurefunktionen ausgewählt aus der Gruppe der Carbonsäuren, Sulfonsäuren oder Phosphonsäuren oder eine Ammoniumfunktion besitzen.

"Anorganische Säuren" werden ausgewählt aus der Gruppe der Mineralsäuren oder aus der Gruppe der Ammoniumsalze anorganischer oder organischer Säuren. Darunter fallen beispielsweise Halogenwasserstoff- und

Nichtmetallsauerstoffsäuren, sowie deren Ammoniumsalze und die Ammoniumsalze organischer Säuren.

Beispiele für anorganische Säuren sind Blausäure, Phosphorsäure, Phosphorige Säure, Phosphinsäure, Schwefelsäure, Schweflige Säure, Thioschwefelsäure, Polyschwefelsäuren, Salzsäure, Salpetersäure, Salpetrige Säure, Borsäure, Chlorsulfonsäure, Dioxoborsäure, Diphosphorsäure, Dischwefelsäure, Kieselsäuren, wobei Phosphorsäure bevorzugt ist.

Beispiele für Ammoniumsalze anorganischer Säuren sind Ammoniumchlorid, Ammoniumacetat, Ammoniumsulfat, Ammoniumpersulfat, Ammoniumnitrat, Ammoniummolybdat und Ammoniumbromid.

Weitere Beispiele für Ammoniumsalze sind außerdem die Ammoniumsalze der unten aufgelisteten organischen Säuren.

Organische Säuren umfassen gesättigte und ungesättigte Carbonsäuren, Sulfonsäuren, und Phosphonsäuren und die korrespondierenden Säuren organischer Amine.

Beispiele für gesättigte, einbasige organische Säuren sind Ameisensäure, Essigsäure, Propionsäure, Buttersäure, Valeriansäure, Capronsäure, Önanthsäure, Caprylsäure, Pelargonsäure, Caprinsäure, Gluconsäure, Glucuronsäure, Taurin, Arginin, Glycin, Glycolsäure. Beispiele für gesättigte zwei-und mehrbasige organische Säuren sind Oxalsäure, Malonsäure, Bernsteinsäure, Glutarsäure, Adipinsäure, Pimelinsäure, Suberinsäure, Azelainsäure, Sebacinsäure, Tartronsäure, Weinsäure, Äpfelsäure, α-Ketoglutarsäure, Fumarsäure, Maleinsäure, Hydroxyfumarsäure, Tartronsäure, Ketomalonsäure, Oxalpropionsäure, Oxalacetat, Milchsäure, Oxalessigsäure und Zitronensäure, wobei Ameisensäure, Essigsäure, Propionsäure bevorzugt sind und Essigsäure besonders bevorzugt ist.

Beispiele für ungesättigte oder aromatische organische Säuren sind Benzoesäure, Phthalsäure, Isophtalsäure, Terephthalsäure. Organische Sulfonsäuren umfassen Alkyl- und Arylsulfonsäuren, wie beispielsweise Methansulfonsäure, Ethansulfonsäure Trifluormethansulfonsäure, Trichlormethansulfonsäure, Toluolsulfonsäuren, Phenolsulfonsäuren, und 4-Alkylsulfonsäuren.

Die Gruppe der organischen Amine umfasst beispielsweise Mono-, Di-, oder Trialkylamine bzw. Aryl-, Alkylarylamine. Beispiele sind Dimethylamin, Diethylamin, Butylamin, Diisopropylamin, Diisopropylethylamin, Monoethanolamin, Anilin, o-, m-, -p-Alkylanilin.

Die Säuren und Salze können entweder in Wasser oder organischen Lösungsmitteln in beliebigen Konzentrationen gelöst zugegeben werden.

Bei den erfindungsgemäßen Entschäumerformulierungen können wasserunlösliche organische Verbindungen (7) eingesetzt werden. Unter dem Begriff "wasserunlöslich" soll im Sinne der vorliegenden Erfindung eine Löslichkeit in Wasser bei 25°C und einem Druck von 101,425 kPa von maximal 3 Gewichtsprozenten verstanden werden.

Bei der gegebenenfalls eingesetzten Komponente (7) handelt es sich vorzugsweise um wasserunlösliche organische Verbindungen mit einem Siedepunkt größer als 100°C bei dem Druck der umgebenden Atmosphäre, also bei 900 bis 1100 hPa, insbesondere um solche, ausgewählt aus Mineralölen, nativen Ölen, Isoparaffinen, Polyisobutylenen, Rückständen aus der Oxoalkoholsynthese, Estern niedermolekularer synthetischer Carbonsäuren, wie z. B. Pentandiol-1,3-diisobutyrat, Fettsäureestern, wie z. B. Octylstearat, Dodecylpalmitat oder iso-Propylmyristat, Fettalkoholen, Ethern niedermolekularer Alkohole, Phthalaten, Estern der Phosphorsäure und Wachsen.

Bei den erfindungsgemäßen Entschäumerformulierungen können polyethermodifizierte Polysiloxane (8), die linear oder verzweigt sein können und mindestens eine Polyethergruppe tragen, eingesetzt werden. Derartige polyethermodifizierte Polysiloxane sind bekannt und z. B. in EP 1076073 A1, insbesondere Seite 2, Zeile 35 bis Seite 4, Zeile 46, beschrieben (incorporated by reference).

Beispiele für alkalische Katalysatoren (9) sind Alkali- und Erdalkalihydroxide, wie NaOH, KOH, CsOH, LiOH und Ca(OH)₂. Beispiele für saure Katalysatoren (9) sind Salzsäure, Schwefelsäure und Phosphornitrilchloride.

Bei den Umsetzungsprodukten von (9) mit den Komponenten (1) bis (8) handelt es sich beispielsweise um das Produkt aus der als Füllstoff (2) bevorzugten Kieselsäure mit Alkalihydroxiden, wie z. B. Kaliumsilicat oder Natriumsilicat.

Die Dosierung der Katalysatoren kann in typischen organischen Lösemitteln wie Alkoholen (wie z.B. Methanol, Ethanol, Isopropanol) oder Estern (wie z.B. Essigsäureethylester) erfolgen.

Bei den in den erfindungsgemäßen Entschäumerformulierungen eingesetzten Komponenten (2) bis (9) kann es sich jeweils um eine Art einer solchen Komponente wie auch um ein Gemisch aus mindestens zwei Arten einer jeweiligen Komponente handeln.

Die erfindungsgemäßen Entschäumerformulierungen haben einen Tag nach deren Herstellung eine Viskosität von vorzugsweise 5000 bis 150000 mPa·s bei 25°C, bevorzugt eine Viskosität von unter 25000 mPa·s bei 25°C, und besitzen nach zwölf Wochen Lagerung bei 25°C und 101,425 kPa vorzugsweise eine Viskosität unter 200000 mPa·s, bevorzugt unter 35000 mPa·s.

Das Herstellen der erfindungsgemäßen Entschäumerformulierungen kann nach bekannten Verfahren, wie durch Mischen aller Komponenten erfolgen, wie z. B. unter Anwendung von hohen Scherkräften in Kolloidmühlen, Dissolvern oder Rotor-Stator-Homogenisatoren. Dabei kann der Mischvorgang bei reduziertem Druck erfolgen, um das Einmischen von Luft, welche z. B. in hochdispersen Füllstoffen enthalten ist, zu verhindern. Im Anschluss kann bei Bedarf die in situ Hydrophobierung der Füllstoffe erfolgen.

Es ist auch möglich erst die Komponenten (1) vorzulegen und ggf. zu erhitzen und dann sukzessive die Komponenten (2), (3), (4), (5), ggf. (6) und ggf. (7) und ggf. (8) und ggf. (9) zuzugeben.

In einer bevorzugten Ausführungsform wird Komponente (3) in gelöster Form als Lösung in Komponente (6) oder Teilen der Komponente (6) oder als Lösung in Komponente (7) oder Teilen der Komponente (7) zugegeben.

Gegenstand der Erfindung sind weiterhin Emulsionen enthaltend erfindungsgemäße Entschäumerformulierungen,
Emulgatoren und
Wasser.

Falls es sich bei den erfindungsgemäßen Entschäumerformulierungen um Emulsionen handelt, können alle Emulgatoren eingesetzt werden, die dem Fachmann zur Herstellung von Siliconemulsionen bekannt sind, wie z. B. nichtionische, anionische oder kationische Emulgatoren.

Bevorzugt werden Emulgatormischungen eingesetzt, wobei mindestens ein nichtionischer Emulgator enthalten sein sollte.

(Nicht einschränkende) Beispiele für verwendete nichtionische Emulgatoren sind:
1. Alkylpolyglycolether, vorzugsweise solche mit 3 bis 30 EO-Einheiten und Alkylresten von 8 bis 20 C-Atomen.
2. Carbonsäurepolyglycolester, insbesondere Fettsäurepolyglycolester, vorzugsweise solche mit größer 6 EO-Einheiten und Carbonsäureresten von 8 bis 20 C-Atomen.
3. Ethoxylierte oder nicht ethoxylierte Sorbitanfettsäureester.
4. Ethoxyliertes Rizinusöl oder hydrierte Varianten.
5. Polyglycerincarbonsäureester.
6. Alkylpolyglykoside der allgemeinen Formel R*-O-Z_{O}, worin R* einen linearen oder verzweigten, gesättigten oder ungesättigten Alkylrest mit im Mittel 8-24 C-Atomen und Zo einen Oligoglykosidrest mit im Mittel o = 1-10 Hexose- oder Pentoseeinheiten oder Gemischen davon bedeuten.
7. Alkylarylpolyglycolether, vorzugsweise solche mit 5 bis 30 EO-Einheiten und 8 bis 20 C-Atomen in den Alkyl- und Arylresten.
8. Ethylenoxid/Propylenoxid(EO/PO)-Blockcopolymere, vorzugsweise solche mit 8 bis 30 EO- bzw. PO-Einheiten.
9. Polyvinylalkohol, der noch 5 bis 50%, vorzugsweise 8 bis 20 Vinylacetateinheiten aufweist, mit einem Polymerisationsgrad von 500 bis 3000.
10. Additionsprodukte von Alkylaminen mit Alkylresten von 8 bis 22 C-Atomen mit Ethylenoxid oder Propylenoxid.
11. Naturstoffe und deren Derivate, wie Lecithin, Lanolin, Saponine, Cellulose; Cellulosealkylether und Carboxyalkylcellulosen, deren Alkylgruppen jeweils bis zu 4 Kohlenstoffatome besitzen.
12. Polare Gruppen, enthaltend insbesondere die Elemente O, N, C, S, P, Si, enthaltende lineare Organo(poly)siloxane, insbesondere solche mit Alkoxygruppen mit bis zu 24 C-Atomen und/oder bis zu 40 EO- und/oder PO-Gruppen.

### Bevorzugte nicht-ionische Emulgatoren sind

1. Alkylpolyglycolether, vorzugsweise solche mit 3 bis 30 EO-Einheiten und Alkylresten von 8 bis 20 C-Atomen wie z. B. Ceteareth-20, Oleth-10, Oleth-20, Laureth-3, Laureth-4, Laureth-20, Laureth-23, Trideceth-5, Trideceth-6, Trideceth-8, Trideceth-10, Trideceth-12, Trideceth-16, Trideceth-20, Steareth-20 oder Steareth-21 (nach INCI-Bezeichnung).
2. Carbonsäurepolyglycolester, insbesondere Fettsäurepolyglycolester, vorzugsweise solche mit größer 6 EO-Einheiten und Carbonsäureresten von 8 bis 20 C-Atomen, wie z.B. PEG-20 Stearat, PEG-20 Laurat, PEG-7 Olivate, PEG-8 Oleate, PEG-8 Laurate HLB PEG-6 Stearate, PEG-20-Stearate oder PEG-100 Stearate (nach INCI-Bezeichnung).
3. Ethoxylierte oder nicht ethoxylierte Sorbitanfettsäureester, wie z.B. Sorbitan Laurate, Polysorbat 20, Polysorbat 60, Polysorbat 80 oder Polysorbat 85 (nach INCI-Bezeichnung).
4. Ethoxyliertes Rizinusöl oder hydrierte Varianten, wie z.B. (Bezeichnung nach INCI-Nomenklatur) PEG 200 Castor Oil oder PEG-60 hydrogenated Castor Oil.
5. Polyglycerincarbonsäureester, wie z.B. Polyglycerin-10 Oleat, Polyglycerin-10 Laurat oder Polyglycerin-10-Stearat.
6. Alkylpolyglykoside der allgemeinen Formel R*-O-Z_{O}, worin R* einen linearen oder verzweigten, gesättigten oder ungesättigten Alkylrest mit im Mittel 8-24 C-Atomen und Z_{O} einen Oligoglykosidrest mit im Mittel o = 1-10 Hexose- oder Pentoseeinheiten oder Gemischen davon bedeuten, wie z. B. Glucopon 215, Glucopon 225, Glucopon 600 (Bezeichnung nach Handelsnamen).

(Nicht einschränkende) Beispiele für anionische Emulgatoren sind:
1. Alkylsulfate, besonders solche mit einer Kettenlänge von 8 bis 18 C-Atomen, Alkyl- und Alkarylethersulfate mit 8 bis 18 C-Atomen im hydrophoben Rest und 1 bis 30 Ethylenoxid (EO)-bzw. Propylenoxid(PO)einheiten.
2. Sulfonate, besonders Alkylsulfonate mit 8 bis 18 C-Atomen, Alkylarylsulfonate mit 8 bis 18 C-Atomen.
3. Alkali- und Ammoniumsalze von Carbonsäuren mit 8 bis 20 C-Atomen im Alkyl-, Aryl-, Alkaryl- oder Aralkylrest, insbesondere Alkali- und Ammoniumsalze von Fettsäuren vorzugsweise solche mit Carbonsäureresten von 8 bis 20 C-Atomen.
   Bevorzugte anionische Emulgatoren sind Alkali- und Ammoniumsalze von Carbonsäuren mit 8 bis 20 C-Atomen im Alkyl-, Aryl-, Alkaryl- oder Aralkylrest, besonders bevorzugte anionische Emulgatoren sind Alkali- und Ammoniumsalze von Fettsäuren, vorzugsweise solche mit Carbonsäureresten von 8 bis 20 C-Atomen, wie z. B. Natriumsalze, Kaliumsalze, Triethanolammoniumsalze der Laurinsäure, Myristinsäure, Palmitinsäure, Stearinsäure oder auch Ölsäure.
   (Nicht einschränkende) Beispiele für kationische Emulgatoren sind:
      1. Salze von primären, sekundären und tertiären Fettaminen mit 8 bis 24 C-Atomen mit Essigsäure, Schwefelsäure, Salzsäure und Phosphorsäuren.
      2. Alkylpyridinium-, Alkylimidazolinium- und Alkyloxazoliniumsalze, insbesondere solche, deren Alkylkette bis zu 18 C-Atome besitzt, speziell die Halogenide, Sulfate, Phosphate und Acetate.
      3. Quaternäre Alkyl- und Alkylbenzolammoniumsalze, insbesondere solche, deren Alkylgruppen 6 bis 24 C-Atome besitzen, insbesondere die Halogenide, Sulfate, Phosphate und Acetate.

Weiterhin können als Verdicker bekannte Verbindungen, wie Polyacrylsäure, Polyacrylate, Celluloseether wie Carboxymethylcellulose und Hydroxyethylcellulose, Polyurethane, natürliche Verdicker, wie z. B. Xanthan Gum, sowie Konservierungsmittel und andere übliche und dem Fachmann bekannte Zusätze zugesetzt werden.

Die kontinuierliche Phase der erfindungsgemäßen Emulsionen ist bevorzugt Wasser. Es können jedoch auch erfindungsgemäße Entschäumerformulierungen in Form von Emulsionen hergestellt werden, bei denen die kontinuierliche Phase durch die Komponenten (1), (2), (3), (4), (5) und ggf. (6) und ggf. (8) und ggf. (9) gebildet werden oder durch Komponente (7) gebildet wird.

Es kann sich dabei auch um multiple Emulsionen handeln.

Verfahren zur Herstellung von Siliconemulsionen sind bekannt. Üblicherweise erfolgt die Herstellung durch einfaches Verrühren aller Bestandteile und ggf. anschließendes Homogenisieren mit Strahldispergatoren, Rotor-Stator-Homogenisatoren, Kolloidmühlen oder Hochdruckhomogenisatoren.

Falls es sich bei der erfindungsgemäßen Zusammensetzung um Emulsionen handelt, sind Öl-in-Wasser-Emulsionen bevorzugt enthaltend
5 bis 50 Gew.-% erfindungsgemäße Entschäumerformulierungen enthaltend Komponenten (1) bis (5) und ggf. (6) und ggf. (7) und ggf. (8) und ggf. (9),
1 bis 20 Gew.-% Emulgatoren und ggf. Verdicker und 30 bis 94 Gew.-% Wasser.

Die erfindungsgemäßen Zusammensetzungen können auch als frei fließende Pulver formuliert werden. Diese sind z. B. bei der Anwendung in pulverförmigen Waschmitteln bevorzugt. Die Herstellung dieser Pulver ausgehend von den erfindungsgemäßen Entschäumerformulierungen enthaltend Komponenten (1) bis (5) und ggf. (6) und ggf. (7) und ggf. (8) und ggf. (9) erfolgt nach dem Fachmann bekannten Verfahren, wie Sprühtrocknung oder Aufbaugranulation und mit dem Fachmann bekannten Zusätzen.

Gegenstand der Erfindung sind weiterhin Pulver enthaltend erfindungsgemäße Entschäumerformulierungen und Trägermaterialien.

Die erfindungsgemäßen Pulver enthalten bevorzugt 2 bis 20 Gewichts-% der erfindungsgemäßen Entschäumerformulierungen, die die Komponenten (1) bis (5) und ggf. (6) und ggf. (7) und ggf. (8) und ggf. (9) enthalten.

Als Träger kommen z. B. Zeolithe, Natriumsulfat, Natriumbicarbonat, Natriumcarbonat, Cellulosederivate, Harnstoff sowie Harnstoff-Derivate und Zucker zum Einsatz.

Die erfindungsgemäßen Pulver enthalten vorzugsweise 80 bis 98 Gew.-% Trägermaterialien. Weitere Bestandteile der erfindungsgemäßen Pulver können z. B. Wachse sein oder organische Polymere, wie sie z. B. in EP-A 887097 und EP-A 1060778 beschrieben sind.

Die erfindungsgemäßen Entschäumerformulierungen wie auch deren Emulsionen oder Pulver können überall eingesetzt werden, wo Entschäumerformulierungen auf der Basis von Organosiliciumverbindungen auch bisher eingesetzt wurden.

Dies gilt insbesondere zur Bekämpfung von Schaum in wässrigen Tensidsystemen, für die Anwendung in Wasch- und Reinigungsmitteln, zur Bekämpfung von Schaum in Abwasseranlagen, bei Textilfärbeverfahren, bei der Erdgaswäsche, in Polymerdispersionen, und zum Entschäumen von bei der Zellstoffherstellung anfallenden wässrigen Medien.

Die Verwendung der erfindungsgemäßen Entschäumerformulierung in nichtwässrigen Systemen wie bei der Teerdestillation oder der Erdölverarbeitung wird ausgeschlossen.

Ein weiterer Gegenstand der vorliegenden Erfindung ist daher ein Verfahren zum Entschäumen und/oder zur Verhinderung des Schäumens von Medien, indem die erfindungsgemäßen Entschäumerformulierungen oder deren Emulsionen oder Pulver mit den Medien vermischt werden.

Vorzugsweise werden die erfindungsgemäßen Entschäumerformulierungen zum Entschäumen und/oder zur Verhinderung des Schäumens bei der Zellstoffherstellung anfallenden wässrigen Medien eingesetzt.

Die erfindungsgemäßen Entschäumerformulierungen können weiterhin in Wasch- und Reinigungsmitteln und Pflegemitteln, wie z. B. Weichspüler, eingesetzt werden, wobei die erfindungsgemäßen Entschäumerformulierungen in Substanz oder in Form von Emulsionen oder Pulvern eingesetzt werden können.

Ein weiterer Gegenstand der vorliegenden Erfindung sind daher Wasch- und Reinigungsmittel, enthaltend die erfindungsgemäßen Entschäumerformulierungen oder die erfindungsgemäßen Entschäumerformulierungen in Form von Emulsionen oder in Form von Pulvern.

Der Zusatz der erfindungsgemäßen Entschäumerformulierung zu den schäumenden Medien kann direkt erfolgen, gelöst in geeigneten Lösungsmitteln, wie Toluol, Xylol, Methylethylketon oder tert.-Butanol, als Pulver oder als Emulsion. Die zur Erzielung der gewünschten Entschäumerwirkung notwendige Menge richtet sich z. B. nach der Art des Mediums, der Temperatur und der auftretenden Turbulenz.

Bevorzugt werden die erfindungsgemäßen Entschäumerformulierungen in Mengen von 0,1 Gew.-ppm bis 1 Gew.-%, insbesondere in Mengen von 1 bis 100 Gew.-ppm, bezogen auf das Gesamtgewicht des zu entschäumenden Mediums, zum schäumenden Medium zugegeben.

Überraschenderweise wurde gefunden, dass die Wirksamkeit und Handhabbarkeit der erfindungsgemäßen Entschäumerformulierungen durch das erfindungsgemäße Verfahren wesentlich verbessert wird. Die erfindungsgemäßen Entschäumerformulierungen zeichnen sich besonders durch eine sehr gute Handhabbarkeit und Dosierbarkeit sowie durch eine hohe Wirksamkeit sowohl bezüglich des sofortigen Schaumzerfalls als auch der Langzeitwirkung aus.

Die erfindungsgemäßen Entschäumerformulierungen haben den Vorteil, dass sie sich durch eine hohe, langanhaltende Wirksamkeit in unterschiedlichsten Medien bei geringen Zusatzmengen auszeichnen. Das ist sowohl ökonomisch als auch ökologisch außerordentlich vorteilhaft.

Die erfindungsgemäßen Entschäumerformulierungen haben den Vorteil, dass sie eine gute Lagerstabilität aufweisen, d.h. dass sich die Viskosität auch nach mehreren Wochen Lagerung, wie nach 12 Wochen Lagerung, bei Raumtemperatur (25°C und 101,425 kPa) kaum verändert. Die erfindungsgemäßen Entschäumerformulierungen weisen somit auch nach Lagerung eine sehr gute Handhabung und Dosierbarkeit auf, da sie fließfähig bleiben, und zeigen auch nach Lagerung eine hohe Wirksamkeit sowohl bezüglich des sofortigen Schaumzerfalls als auch in der Langzeitwirkung.

In den nachfolgenden Beispielen beziehen sich alle Angaben von Teilen und Prozentsätzen, soweit nicht anders angegeben, auf das Gewicht. Sofern nicht anders angegeben, werden die folgenden Beispiele bei einem Druck der umgebenden Atmosphäre, also bei etwa 101,425 kPa, und bei Raumtemperatur, also etwa 20°C bzw. einer Temperatur, die sich beim Zusammengeben der Reaktanten bei Raumtemperatur ohne zusätzliche Heizung oder Kühlung einstellt, durchgeführt.

Dynamische Viskositäten zur Überprüfung der Viskosität von Entschäumercompounds in Tabelle 3 wurden an einem BROOKFIELD DV3T Rheometer (Modell: RVDV3TX) der Fa. Brookfield-AMETEK GmbH bei 25°C Messtemperatur bei 2,5 Umdrehungen/Minute gemessen. Der Messwert wird 2 min nach Beginn der Rotation abgelesen. Abhängig vom Messbereich werden unterschiedliche Spindeln eingesetzt:

| Spindel-Nr. RV | Messbereich |
|---|---|
| 1 | 800 - 3200 mPa·s |
| 2 | 3200 - 12800 mPa ·s |
| 3 | 8000 - 32000 mPa ·s |
| 4 | 16000 - 64000 mPa ·s |
| 5 | 32000 - 128000 mPa ·s |
| 6 | 80000 - 320000 mPa ·s |
| 7 | 32000 - 1280000 mPa ·s |

Die Kalibrierung des Geräts erfolgte nach den Spezifikationen für Brookfield Viskosimeter (Brookfield Werkskalibriervorschrift LSP-17). LSP-17 beschreibt die Vergleichsmessung zwischen Referenzgerät (Sollwert) und Kundengerät (Istwert) nach Vorgaben des Herstellers. Zur Kalibrierung wurden Flüssigkeiten verwendet, die nachweisbar an internationale Standards (National Institute of Standards and Technology; NIST) angeschlossen sind. Referenz-Gerät: RVT-MAS, Serien-Nr.: 109194; Referenz-Viskositäts-Standards: NIST-flüssigkeit R1260(25C), Lot-Nr.: 160711; Referenz-Temperatursensor: Modell HART1504, Serien-Nr.: A48438. Die Messunsicherheit beträgt 1%.

Kinematische Viskositäten werden mittels eines Viskositäts-Messsystems ViscoSystem^{®} AVS 350 der Fa. Schott unter Verwendung von Ubbelohde Viskosimeterrohren mit Konstante (z.B. der Fa. Windaus oder Fa. VWR) nach DIN 51562-Teil 1 oder ISO/DIS 3105 (einschließlich deren Kalibrierung) bestimmt. Die Messungen erfolgen bei einer Temperatur von 25,0°C (+- 0,1°C). Die Viskositätsangabe (angegeben in mm²/s) stellt den arithmetischen Mittelwert von drei unabhängig durchgeführten Einzelmessungen dar: Die Messunsicherheit der kinematischen Viskosität beträgt 1,05 %. Abhängig vom Messbereich werden unterschiedliche Viskosimeterrohre mit entsprechenden Richtkonstanten verwendet:

| Messbereich | Kapillar-Nr. | Richtkonstante |
|---|---|---|
| 0,5 - 3 mm²/s | 0c | 0,003 K |
| 0,8 - 5 mm²/s | 0a | 0,005 K |
| 1,2 - 10 mm²/s | I | 0,01 K |
| 3 - 30 mm²/s | Ic | 0,03 K |
| 10 - 100 mm²/s | II | 0,10 K |
| 30 - 300 mm²/s | IIc | 0,30 K |
| 100 - 1000 mm²/s | III | 1 K |
| 300 - 3000 mm²/s | IIIc | 3 K |
| 1000 - 10000 mm²/s | IV | 10 K |

Angabe des Messbereichs, der entsprechenden Kapillar-Nr. sowie der Konstante nach VWR-Laborkatalog, 2011-2013, S. 645.8.

¹H-NMR-Spektren werden als Lösung in CDCl₃ an einem Bruker Avance III HD-NMR-Spektrometer (5 mm Breitbandprobenkopf mit ATMA und Z-Gradient) mit einer Messfrequenz von 500,13 MHz aufgenommen.

²⁹Si-NMR-Spektren werden als Lösung in C₆D₆-Toluol an einem Bruker Avance III HD-NMR-Spektrometer (5 mm Breitbandprobenkopf mit ATMA und Z-Gradient) mit einer Messfrequenz von 90,34 MHz aufgenommen.

Die Auswertung erfolgt wie dem Fachmann bekannt und in folgender Literatur beschrieben: "Über die 1H-, 13C- und 29Si-NMR chemischen Verschiebungen einiger linearer, verzweigter und cyclischer Methyl-Siloxan-Verbindungen", G. Engelhardt, H. Jancke; J. Organometal. Chem. 28 (1971), 293-300; "Chapter 8-NMR spectroscopy of organosilicon compounds", Elizabeth A. Williams, The Chemistry of Organic Silicon Compounds, 1989 John Wiley and Sons Ltd, 511-533.

Die Jodzahlbestimmung nach Wijs erfolgt nach DIN 53241-1:1995-05. Die Jodzahl ist definiert durch die Menge an Gramm Jod, die von 100 g Substanz gebunden wird. Die Jodierung der in der Substanz enthaltenen Doppelbindungen und die Rücktitration mittels Natriumthiosulfatlösung des unverbrauchten Jods ergibt eine Maßzahl für den Grad des Olefingehaltes; es ist zu beachten, dass die Bestimmung auch den Wasserstoff, der an Silizium gebunden ist, erfasst.

### Beispiele 1:

### Herstellung der Organosiliciumverbindungen (A):

a) Organosiliciumverbindung **A1:**
   In einem 500 ml Dreihalskolben werden 101,0 g eines Äquilibrats aus Dimethylsiloxy- und Vinyldimethylsiloxyeinheiten mit der Jodzahl 22,0 mit 2,7 g eines Hydrolysats aus Hydrogenmethyldichlorsilan, das mit Trimethylsiloxyeinheiten terminiert ist und eine Kettenlänge von ca. 55 Si-Einheiten hat, 120,0 g eines OH-terminierten Polydimethylsiloxans der Viskosität 62 mm²/s (25,0°C; Kapillar-Nr. II) sowie 28,6 g eines Äquilibrats aus Dimethylsiloxy- und Trimethylsiloxyeinheiten der Viskosität 35 mm /s (25,0° C;
   Kapillar-Nr. II) bei 120°C und einem verminderten Druck von 20 mbar mit 250 ppm PNCl₂ für zwei Stunden äquilibriert. Der Katalysator wird durch Zugabe von NaHCO₃ desaktiviert. Nach Filtration und dem Entfernen flüchtiger Bestandteile bei 160°C und 40 mbar vermindertem Druck erhält man ein Polysiloxan **A1** der Viskosität 81 mm²/s (25,0°C; Kapillar-Nr. II), einer Jodzahl von 13,3 sowie einen H-Gehalt von 0,016 Gew.-%. Die ²⁹Si-NMR-Bestimmung ergibt einen Gehalt an Dimethylsiloxy-Einheiten (entspricht Index x) von 52.
b) Organosiliciumverbindung **A2:**
   In einem 4-Liter-Dreihalskolben werden 197 g 1,3-Divinyltetramethyldisiloxan mit 75 g eines Hydrolysats aus Hydrogenmethyldichlorsilan, das mit Trimethylsiloxyeinheiten terminiert ist und eine Kettenlänge von ca. 55 Si-Einheiten hat, 2745 g Octamethylcyclotetrasiloxan sowie 55 g Hexamethlydisiloxan bei 120°C mit 200 ppm PNCl₂ für 2,5 Stunden äquilibriert. Der Katalysator wird durch Zugabe von MgO desaktiviert. Nach Filtration und dem Entfernen flüchtiger Bestandteile bei 135°C und 10 mbar vermindertem Druck erhält man ein Polysiloxan **A2** der Viskosität 23 mm²/s (25,0°C; Kapillar-Nr. II), einer Jodzahl von 26,6 sowie einen H-Gehalt von 0,038 Gew.-%. Die ²⁹Si-NMR-Bestimmung ergibt einen Gehalt an Dimethylsiloxy-Einheiten (entspricht Index x) von 26.
c) Organosiliciumverbindung **A3:**
   In einem 1000 ml Dreihalskolben werden 497,4 g eines Äquilibrats aus Dimethylsiloxy- und Vinyldimethylsiloxyeinheiten mit der Jodzahl 24,7 mit 17,1 g eines Hydrolysats aus Hydrogenmethyldichlorsilan, das mit Trimethylsiloxyeinheiten terminiert ist und eine Kettenlänge von ca. 55 Si-Einheiten hat sowie 192,0 g eines Äquilibrats aus Dimethylsiloxy- und Trimethylsiloxyeinheiten der Viskosität 34 mm²/s (25,0°C; Kapillar-Nr. II) bei 120°C mit 200 ppm PNCl₂ für zwei Stunden äquilibriert. Der Katalysator wird durch Zugabe von MgO desaktiviert. Nach Filtration erhält man ein Polysiloxan **A3** der Viskosität 24 mm²/s (25,0°C; Kapillar-Nr. II), einer Jodzahl von 25,7 sowie einen H-Gehalt von 0,037 Gew.%. Flüchtige Bestandteile verbleiben im Produkt. Für analytische Zwecke wurde eine kleine Menge des erhaltenen Produkts bei 135°C und 10 mbar vermindertem Druck von flüchtigen Bestandteilen befreit. Die ²⁹Si-NMR-Bestimmung dieser analytischen Probe ergibt einen Gehalt an Dimethylsiloxy-Einheiten (entspricht Index x) von 27.

### Beispiele 2:

### Herstellung der Organopolysiloxane (1):

a) Organopolysiloxan **(1-1):**
   In einem 250 ml Dreihalskolben werden 100,0 g des Polysiloxans **A1** gelöst in 50 ml Xylol zusammen mit 0,2 g einer toluolischen Lösung des Karstedt-Pt-Katalysators (Pt-Gehalt: 0,3 Gew.%) für 3,5 h auf 90°C erhitzt. Während des abschließenden Abkühlens werden 0,3 g Diallylmaleinat hinzugegeben. Das Xylol wird bei 90°C und unter vermindertem Druck von 32 mbar entfernt. Man erhält ein Polysiloxan **(1-1)** der Viskosität 425 mPas (gemessen bei 25°C und einer Scherrate von 1 1/s).
   Zur Herstellung von Organopolysiloxan **(1-1)** wird somit ausschließlich Polysiloxan **A1** verwendet, so dass als überwiegende Komponente Strukturelement (IV) mit x=52 enthalten ist. **(1-1)** liegt als fließfähige Verbindung vor, die nicht zur Vergelung neigt. Ein inertes Lösemittel muss somit nicht verwendet werden.
b) Organopolysiloxan **(1-2):**
   In einem 250 ml Dreihalskolben werden 100,0 g der Polysiloxan **A2** zusammen mit 55,0 g eines linearen Vinyldimethylsilyl-terminierten Polydimethylsiloxan der Jodzahl 1,99 zusammen mit 0,08 g einer Lösung des Karstedt-Pt-Katalysators in linearem Vinyldimethylsilyl-terminierten Polydimethylsiloxan (Pt-Gehalt: 1,0 Gew.%) langsam auf 135°C erhitzt und eine Stunde bei dieser Temperatur belassen. Nach Abkühlen erhält man ein Organopolysiloxan **(1-2)** der Viskosität 2020 mPa·s (gemessen bei 25°C und einer Scherrate von 1 1/s).
   Zur Herstellung von Organopolysiloxan **(1-2)** wird Polysiloxan **A2** im großen Überschuss verwendet, so dass zu einem überwiegenden Teil Strukturelement (IV) mit x=26 enthalten ist. Das Verhältnis von Vinyl zu Si-H liegt bei 2,37. Das lineare Vinyldimethylsilyl-terminierte Polydimethylsiloxan (Komponente (B)) ist somit zu einem überwiegenden Anteil einreagiert und liegt somit in einem minimalen Überschuss vor. Dennoch liegt **(1-2)** als fließfähige Verbindung vor, die nicht zur Vergelung neigt.
c) Organopolysiloxan **(1-3):**
   In einem 500 ml Dreihalskolben werden 150,0 g der Polysiloxan **A3** zusammen mit 30,0 g eines Äquilibrats aus Dimethylsiloxy- und Vinyldimethylsiloxyeinheiten mit der Jodzahl 6,6 zusammen mit 0,09 g einer Lösung des Karstedt-Pt-Katalysators in linearem Vinyldimethylsilyl-terminierten Polydimethylsiloxan (Pt-Gehalt: 1,0 Gew.%) langsam auf 90°C erhitzt und zwei Stunden bei dieser Temperatur belassen. Nach Abkühlen werden bei 130°C und bei einem verminderten Druck von 10 mbar flüchtige Bestandteile entfernt, so dass man ein Organopolysiloxan **(1-3)** der Viskosität 1692 mPa·s (gemessen bei 25°C und einer Scherrate von 1 1/s) erhält.
   Auch zur Herstellung von Organopolysiloxan **(1-3)** wird Polysiloxan **A3** im großen Überschuss verwendet, so dass zu einem überwiegenden Teil Strukturelement (IV) mit x=27 enthalten ist. Das Verhältnis von Vinyl zu Si-H liegt bei 1,87. Das lineare Vinyldimethylsilyl-terminierte Polydimethylsiloxan (Komponente (B) ) st somit ebenfalls zu einem überwiegenden Anteil einreagiert und liegt somit ebenfalls in einem minimalen Überschuss vor. Dennoch liegt **(1-3)** als fließfähige Verbindung vor, die nicht zur Vergelung neigt.
d) Organopolysiloxan **(V1):**
   Herstellung eines über die Struktureinheit O_{2/2}RSi-Y-SiR₂O_{1/2} verbrückten Organopolysiloxans (**V1**) gemäß EP 434 060 A2 (nicht erfindungsgemäß):
   In einem 2 Liter Dreihalskolben werden 7,3 g einer Organosiliciumverbindung der Zusammensetzung MesSi-(OSiMe₂)₄-(OSiHMe)₄-OSiMe₃ zusammen mit 900,0 g eines Äquilibrats aus Dimethylsiloxy- und Vinyldimethylsiloxyeinheiten mit einem Vinyl-Gehalt von 1,23 mol-% vorgelegt. Das Verhältnis von Vinyl- zu Si-H-Gruppen beträgt 3,4:1. Es werden 0,28 g einer Lösung des Karstedt-Pt-Katalysators in linearem Vinyldimethylsilyl-terminierten Polydimethylsiloxan (Pt-Gehalt: 1,0 Gew.%) hinzugefügt und die Reaktionsmischung wird langsam auf 80°C erhitzt und eine Stunde bei dieser Temperatur belassen. Nach Abkühlen wird ein Polysiloxan **V1** der Viskosität 7000 mm²/s (25,0°C; Kapillar-Nr. IV) erhalten.

### Beispiele 3:

### Herstellung der nicht erfindungsgemäßen Entschäumerformulierungen

**VC1** und **VC2** mit dem Organopolysiloxan **(1-2)** bzw. **V1**:
Zur Herstellung der Entschäumerformulierungen werden die in der Tabelle 1 beschriebenen Stoffe (1), (2), (3), ggf. (6), ggf. (7), ggf. (8) und ggf. (9) mit einem Dissolver vermischt und 4 Stunden auf 150°C erhitzt. Nach dem Abkühlen wird die Mischung nochmals homogenisiert.

### Allgemeine Vorschrift zur Herstellung der erfindungsgemäßen

Entschäumerformulierung **C1** mit den erfindungsgemäßen Organopolysiloxanen:
Zur Herstellung der Entschäumerformulierungen werden die in der Tabelle 2 beschriebenen Stoffe (1), (2), (3), (4), ggf. (6), ggf. (7) und ggf. (9) mit einem Dissolver vermischt und 4 Stunden auf 150°C erhitzt. Nach dem Abkühlen werden die Komponenten (5) und ggf. (8) nochmals mit dem Dissolver eingearbeitet und homogenisiert. Verwendete Stoffe:
- (1-2):: Organopolysiloxan hergestellt nach Beispiel 2b
- (V1):: Organopolysiloxan hergestellt nach Beispiel 2d
- (2-1):: Eine hydrophile pyrogene Kieselsäure mit einer BET-Oberfläche von 300 m²/g (erhältlich bei der Wacker Chemie AG, Deutschland unter der Bezeichnung HDK^{®} T30)
- (3-1):: Ein bei Raumtemperatur festes Siliconharz bestehend aus (nach ²⁹Si-NMR und IR-Analyse) 40 mol-% (CH₃)₃SiO_{1/2}, 50 mol-% SiO_{4/2}-, 8 mol-% C₂H₅OSiO_{3/2}- und 2 mol-% HOSiO_{3/2}-Einheiten mit einer gewichtsmittleren Molmasse von 7900 g/mol (bezogen auf Polystyrolstandard)
- (4-1):: Ein nichtionisches Tensid mit der durchschnittlichen Formel iso-(C₁₃H₂₇)-[O-C₂H₄]₅-OH
- (5-1):: ortho-Phosphorsäure, 85%ige wässrige Lösung
- (6-1):: Ein mit Trimethylsiloxangruppen terminiertes Polydimethylsiloxan mit einer Viskosität von 100 mPa·s bei 25°C (erhältlich unter der Bezeichnung Wacker^{®} AK 100 Siliconöl bei der Fa. Wacker Chemie AG)
- (8-1):: Ein Polyether-modifiziertes Silicon-Copolymer der Struktur (H₃C)₃Si-[Si(CH₃)₂O]ᵤ-[GSi (CH₃)O)ᵥ-Si(CH₃)₃ mit G = (CH₂)₃-(O-CH₂CH₂)_{w}-(O-CH(CH₃)-CH₂)ₓ-OH , wobei u, v, w und x so gewählt werden, dass das Polymer eine Viskosität von 1100 mPa·s und einen Trübungspunkt (nach DIN EN 1890) von 25°C aufweist,
- (9-1):: eine 20%ige methanolische Lösung an KOH.

**Tabelle 1: Vergleichsversuche VC1 und VC2 - Zusammensetzung der Entschäumerformulierungen**

| Vergleich | **VC1¹⁾** | **VC2** |
|---|---|---|
| | nicht erfindungsgemäß Teile (eingesetzte Komponente) | nicht erfindungsgemäß Teile, (eingesetzte Komponente) |
| Komponente (1) | 71,0 | 71,0 |
| | **(V1)** | **(1-2)** |
| Komponente (2) | 4,9 | 4,8 |
| | **(2-1)** | **(2-1)** |
| Komponente (3) | 3,8 | 3,8 |
| | **(3-1)** | **(3-1)** |
| Komponente (4) | 0,0 | 0,0 |
| Komponente (5) | 0,0 | 0,0 |
| Komponente (6) | 15,3 | 15,3 |
| | **(6-1)** | **(6-1)** |
| Komponente (8) | 4,0 | 4,0 |
| | **(8-1)** | **(8-1)** |
| Komponente (9) | 0,7 | 0,7 |
| | **(9-1)** | **(9-1)** |

| | | |
|---|---|---|
| ¹⁾Vergleichsversuch VC3 gemäß EP 434 060 A2 | | |

**Tabelle 2: Zusammensetzung der erfindungsgemäßen Entschäumerformulierung C1**

| Beispiel | **C1** |
|---|---|
| | Teile, (eingesetzte Komponente) |
| Komponente (1) | 69,7 |
| | **(1-2)** |
| Komponente (2) | 4,7 |
| | **(2-1)** |
| Komponente (3) | 3,8 |
| | **(3-1)** |
| Komponente (4) | 1,5 |
| | **(4-1)** |
| Komponente (5) | 0,1 |
| | **(5-1)** |
| Komponente (6) | 15,3 |
| | **(6-1)** |
| Komponente (8) | 4,0 |
| | **(8-1)** |
| Komponente (9) | 0,7 |
| | **(9-1)** |

Die Nummerierung der Komponenten in den Tabellen 1 und 2 entspricht der in der Beschreibung verwendeten Nummerierung der Komponenten (1) bis (9).

### Beispiele 4:

**Tabelle 3: Rheologische Eigenschaften von Entschäumerformulierungen gemessen an verschiedenen Zeitpunkten nach der Herstellung**

| Beispiel/ Vergleich (Lagertemperatur) | Viskosität [mPa ·s] einen Tag nach der Herstellung | Viskosität [mPa ·s] drei Wochen nach der Herstellung | Viskosität [mPa·s] fünf Wochen nach der Herstellung | Viskosität [mPa ·s] neun Wochen nach der Herstellung | Viskosität [mPa ·s] zwölf Wochen nach der Herstellung |
|---|---|---|---|---|---|
| VC2 (25°C) | 50.000 | 110.000 | 138.000 | >400.000 | >400.000 |
| C1 (25°C) | 20.000 | 21.000 | 23.000 | 27.000 | 28.000 |
| VC2 (50°C) | 50.000 | >400.000 | >400.000 | >400.000 | >400.000 |
| C1 (50°C) | 20.000 | 51.000 | 81.000 | 160.000 | 189.000 |

Tabelle 3 zeigt, dass die nicht-erfindungsgemäße Formulierung **VC2** bereits nach neun Wochen Lagerung (bei 25°C und 101,425 kPa) eine Viskosität oberhalb des messbaren Bereichs von 400.000 mPa·s erreicht hat, wohingegen die erfindungsgemäße Formulierung **C1** selbst nach längerer Lagerungsdauer von zwölf Wochen bei den gleichen Bedingungen (25°C und 101,425 kPa) eine vergleichsweise geringe Viskosität von 28.000 mPa·s besitzt. Werden die Entschäumerformulierungen bei 50°C und 101,425 kPa unter verschärften Bedingungen gelagert, zeigt sich, dass die nicht-erfindungsgemäße Formulierung **VC2** bereits nach drei Wochen eine Viskosität von über 400.000 mPa·s erreicht hat, wohingegen die erfindungsgemäße Formulierung selbst nach zwölf Wochen nur eine vergleichsweise geringe Viskosität von 189.000 mPa·s aufweist.

Diese Ergebnisse zeigen, dass die erfindungsgemäße Formulierung **C1** nach zwölf Wochen eine deutlich bessere Handhabung besitzt als die nicht-erfindungsgemäße Formulierung **VC1,** die nach Lagerung große Nachteile in der Handhabung aufweist.

### Beispiele 5:

Prüfung der Entschäumerwirksamkeit der erfindungsgemäßen Entschäumerformulierung **C1** und der nicht erfindungsgemäßen

### Entschäumerformulierungen VC1 und VC2 in der Schwarzlaugen-Entschäumung:

Die so erhaltenen erfindungsgemäßen und nicht erfindungsgemäßen Entschäumerformulierungen wurden hinsichtlich des Tests in der Schwarzlauge (Hardwood bzw. Softwood) überprüft. Die Ergebnisse dieser Tests sind in den Tabellen 4 und 5 zusammengefasst.

Zur besseren (genaueren) Dosierung wurde eine Mischung aus 40 Gew.-Teilen der in Tabellen 1-9 genannten Entschäumerformulierungen und 60 Gew.-Teilen eines Gemisches aus aliphatischen Kohlenwasserstoffen mit einer Viskosität von 3 mm²/s und einem Flammpunkt > 100°C mit einem Labordissolver bei 1.000 min⁻¹ hergestellt.

400 ml Schwarzlauge aus dem Zellstoffprozess werden in einer auf 80°C temperierten 1000 ml Umpumpapparatur mit einer Umpumpgeschwindigkeit von 1,5 l/min umgepumpt. Sobald das Schaumniveau eine Höhe von 75 mm erreicht hat, wird der Entschäumer zudosiert, Schaumzerfallszeit und das niedrigste Schaumniveau, das nach Zugabe von Entschäumer und einsetzendem Schaumzerfall erreicht wird, werden festgehalten.

Je kleiner die Schaumzerfallszeit t1 und je niedriger das Schaumniveau h1 sind, desto besser ist die Schnellwirkung eines Entschäumers.

Danach wird die Langzeitwirkung des Entschäumers bestimmt, welche die Zeitspanne t2 darstellt, die benötigt wird, um vom niedrigsten Schaumniveau zum ursprünglichen Schaumniveau (75 mm) zu kommen.

**Tabelle 4: Ergebnisse der Prüfung der Entschäumerwirksamkeit an Schwarzlauge aus dem Zellstoffprozess (Hardwood der Fa. UPM KAUKAS Lappeenranta aus Lappeenranta, Finnland) Dosierung: 5 µl der Mischung aus Entschäumerformulierung und Kohlenwasserstoffgemisch**

| Beisp. bzw. Vergl. | Schaumzerfallszeit t1 in [s] | Schaumniveau nach Schaumzerfall [mm] | Langzeitwirkung t2 in [s] |
|---|---|---|---|
| **VC1¹⁾** | 26 | 34 | 158 |
| **VC2** | 13 | 23 | 211 |
| **C1** | 13 | 25 | 234 |

| | | | |
|---|---|---|---|
| ¹⁾Vergleichsversuch gemäß EP 434 060 A2 | | | |

**Tabelle 5: Ergebnisse der Prüfung der Entschäumerwirksamkeit an Schwarzlauge aus dem Zellstoffprozess (Softwood der Fa. UPM KAUKAS Lappeenranta aus Lappeenranta, Finnland) Dosierung: 5 µl der Mischung aus Entschäumerformulierung und Kohlenwasserstoffgemisch**

| Beisp. bzw. Vergl. | Schaumzerfallszeit t1 in [s] | Schaumniveau nach Schaumzerfall [mm] | Langzeitwirkung t2 in [s] |
|---|---|---|---|
| **VC1¹⁾** | 23 | 30 | 135 |
| **VC2** | 10 | 23 | 189 |
| **C1** | 12 | 25 | 184 |

| | | | |
|---|---|---|---|
| ¹⁾Vergleichsversuch gemäß EP 434 060 A2 | | | |

Die Tabelle 4 zeigt, dass die erfindungsgemäße Formulierung **C1** und die nicht-erfindungsgemäße Formulierung **VC2** (ohne Additive (4) und (5)) im Hinblick auf die Entschäumung von **Hardwood-**Schwarzlauge gegenüber der Vergleichsformulierung **VC1** gemäß Stand der Technik eine vergleichbare Wirkung bezüglich der Schaumzerfallszeit t1 und vergleichbare Schaumhöhe besitzen. Die erfindungsgemäße Formulierung **C1** zeichnet sich aber durch eine bessere Langzeitwirkung t2 insbesondere im Vergleich zu der nach dem Stand der Technik hergestellten Formulierung **VC1** (ohne Additiv) aus und auch im Vergleich zu der nicht-erfindungsgemäßen Formulierung **VC2** (ohne Additiv (4) und (5)). Es zeigte sich, dass die Langzeitwirkung (t2) durch Zusatz des Additives in frisch hergestellten Entschäumerformulierungen sogar noch gesteigert werden kann.

Im Hinblick auf die Entschäumung von **Softwood-**Schwarzlauge ist ein ähnlicher Trend in der Schaumzerfallszeit (t1), der Schaumhöhe und der Langzeitwirkung (t2) bei der nicht-erfindungsgemäßen Entschäumerformulierung **VC2** und der erfindungsgemäßen Entschäumerformulierung **C1** gegenüber dem Stand der Technik **VC1** zu erkennen. Ein Unterschied in der Langzeitwirkung zwischen der nicht-erfindungsgemäßen Entschäumerformulierung **VC2** und der erfindungsgemäßen Entschäumerformulierung **C1** ist bei der Entschäumung von Softwood-Schwarzlauge nicht zu erkennen, aber die Langzeitwirkung (t2) ist deutlich besser gegenüber der Entschäumerformulierung **VC1** gemäß Stand der Technik (siehe Tabelle 5).

Nach 5 Wochen Lagerung bei 50°C zeigt die erfindungsgemäße Entschäumerformulierung **C1** bei der Entschäumung von Softwood-und Hardwood-Schwarzlauge eine - im Vergleich zur nichtgelagerten Entschäumerformulierung **C1** - vergleichbare Schaumzerfallszeit t1 und Schaumhöhe und eine weiterhin gute Langzeitwirkung (t2).

## Patentansprüche

1. Entschäumerformulierungen enthaltend:
(1) Organopolysiloxane enthaltend pro Molekül mindestens eine Struktureinheit der allgemeinen Formel
O_{1/2}R₂Si-Y-SiRO_{2/2} (I)
und mindestens 2 Einheiten der allgemeinen Formel
R¹R₂SiO_{1/2} (II)
und Einheiten der allgemeinen Formel
R₂SiO_{2/2} (III),
wobei
R gleich oder verschieden sein kann und einen einwertigen SiC-gebundenen Kohlenwasserstoffrest mit 1 bis 30 C-Atomen, der ein oder mehrere voneinander getrennte O-Atome enthalten kann und der frei von aliphatischen Kohlenstoff-Kohlenstoff-Mehrfachbindungen ist, bedeutet und
R¹ gleich R oder ein Alkenylrest mit 2 bis 30 C-Atomen, vorzugsweise ein Methyl- oder ein Vinylrest ist, wobei mindestens ein Alkenylrest pro Molekül enthalten ist,
Y einen zweiwertigen Kohlenwasserstoffrest mit 2 bis 30 C-Atomen bedeutet, mit der Maßgabe, dass das Organopolysiloxan ein Strukturelement der Formel
R₂Y²SiO-(SiR₂O)₁-SiRY¹O-(SiR₂O)ₓ₂-SiR₂R¹ (IV)
enthält, wobei
Y¹ R und R¹ die oben dafür angegebene Bedeutung haben, einen zweiwertigen Kohlenwasserstoffrest mit 2 bis 30 C-Atomen, der an eine Gruppe der Formel SiR₂O_{1/2} gebunden ist, bedeutet,
Y² einen zweiwertigen Kohlenwasserstoffrest mit 2 bis 30 C-Atomen, der an eine Gruppe der Formel SiRO_{2/2} gebunden ist, bedeutet und
x₁ und x₂ gleich 0 oder eine ganze Zahl ist, mit der Maßgabe, dass die Summe x₁+x₂=x ist, wobei x durchschnittlich größer 5, vorzugsweise größer 10, und kleiner 100, vorzugsweise kleiner 80, bevorzugt kleiner 60, ist.
(2) Füllstoffe,
(3) Organopolysiloxanharze aus Einheiten der allgemeinen Formel
R²ₑ(R³O)_{f}SiO_{(4-e-f)/2} (V)
,
worin
R² gleich oder verschieden sein kann und ein Wasserstoffatom oder einen einwertigen, gegebenenfalls substituierten, SiC-gebundenen Kohlenwasserstoffrest mit 1 bis 30 C-Atomen bedeutet,
R³ gleich oder verschieden sein kann und ein Wasserstoffatom oder einen einwertigen, gegebenenfalls substituierten Kohlenwasserstoffrest mit 1 bis 4 C-Atomen bedeutet,
e 0, 1, 2 oder 3 ist und
f 0, 1, 2 oder 3 ist, mit der Maßgabe, dass die Summe e+f kleiner oder gleich 3 ist und in weniger als 50 % aller Einheiten der Formel (V) im Organopolysiloxanharz die Summe e+f gleich 2 ist,
(4) polyethylenoxidhaltige Tenside und
(5) anorganische oder organische Säuren.

2. Entschäumerformulierungen nach Anspruch 1, **dadurch gekennzeichnet, dass** Y sowie Y¹ und Y² ein Rest der Formel -CH₂CH₂- ist.

3. Entschäumerformulierungen nach Anspruch 1, **dadurch gekennzeichnet, dass** die Organopolysiloxane (1) hergestellt werden, indem
(A) oligomere oder polymere Organosiliciumverbindungen, die
Einheiten der allgemeinen Formel
R¹R₂SiO_{1/2} (II),
Einheiten der allgemeinen Formel
R₂SiO_{2/2} (III),
und Einheiten der allgemeinen Formel
HRSiO_{2/2} (VIII)
enthalten, wobei
R und R¹ die im Anspruch 1 dafür angegebene Bedeutung haben,
mit der Maßgabe, dass
mindestens ein Alkenylrest R¹ pro Molekül enthalten ist, die Summe der Einheiten HRSiO_{2/2} und R¹R₂SiO_{1/2} durchschnittlich größer als 2,0 ist,
und die Anzahl der Alkenylreste R¹ durchschnittlich größer ist als die Anzahl der Si-gebundenen Wasserstoffatome,
und gegebenenfalls
(B) oligomere oder polymere Organosiliciumverbindungen, die
Einheiten der allgemeinen Formel
R⁷R₂SiO_{1/2} (IX)
und
Einheiten der allgemeinen Formel
R₂SiO_{2/2} (III)
enthalten, wobei
R die in Anspruch 1 dafür angegebene Bedeutung hat und
R⁷ ein Alkenylrest mit 2 bis 30 C-Atomen, vorzugsweise ein Vinylrest ist,
in Gegenwart von
(C) die Anlagerung von Si-gebundenem Wasserstoff an
aliphatische Doppelbindung fördernde Katalysatoren umgesetzt werden,
wobei das eingesetzte Verhältnis von aliphatischer Doppelbindung in den Komponenten (A) und gegebenenfalls (B) zu Si-gebundenem Wasserstoff in der Komponente (A) 1,2 bis 10, vorzugsweise 1,5 bis 5,0, bevorzugt 1,7 bis 3,0, beträgt.

4. Entschäumerformulierungen nach Anspruch 3, **dadurch gekennzeichnet, dass** als Organosiliciumverbindungen (A) solche der Formel
R¹R₂SiO-(SiR₂O)ₓ-(HSiR)_{y}-O-SiR₂R¹ (X)
eingesetzt werden, wobei
R, R¹ und x die in Anspruch 1 dafür angegebene Bedeutung aufweisen,
und y durchschnittlich mindestens 0,5, bevorzugt mindestens 0,6, besonders bevorzugt mindestens 0,7, und durchschnittlich höchstens 1,5, bevorzugt höchstens 1,2 und besonders bevorzugt höchstens 1,0, ist,
mit der Maßgabe, dass mindestens ein Alkenylrest R¹ pro Molekül enthalten ist,
die Summe der Einheiten HRSiO_{2/2} und R¹R₂SiO_{1/2} durchschnittlich größer als 2,0 ist,
und die Anzahl der Alkenylreste R¹ durchschnittlich größer ist als die Anzahl der Si-gebundenen Wasserstoffatome.

5. Entschäumerformulierungen nach Anspruch 3 oder 4, **dadurch gekennzeichnet, dass** als Organosiliciumverbindungen (B) solche der Formel
R⁷R₂SiO-(SiR₂O)_{z}-O-SiR₂R⁷ (XI)
eingesetzt werden, wobei
R und R⁷ die in Anspruch 3 dafür angegebene Bedeutung haben und
z durchschnittlich größer 5, vorzugsweise größer 10, und kleiner 1000, vorzugsweise kleiner 500, besonders bevorzugt kleiner 250, ist.

6. Entschäumerformulierungen nach einem der Ansprüche 1 bis 5, **dadurch gekennzeichnet, dass** als polyethylenoxidhaltige Tenside (4) Alkylpolyglycolether der Formel
R⁴-[O-CH₂-CH₂]ₙ-OH (VI)
,
worin
R⁴ einen einwertigen Kohlenwasserstoffrest mit 1 bis 30 C-Atomen, vorzugsweise 4 bis 30 C-Atome, insbesondere 10 bis 20 C-Atome, bedeutet und
n ganzzahlige Werte zwischen 1 und 100, vorzugsweise zwischen 3 und 20, bevorzugt zwischen 3 und 10 aufweist, eingesetzt werden.

7. Entschäumerformulierungen nach einem der Ansprüche 1 bis 6, **dadurch gekennzeichnet, dass** als Säure (5) Phosphorsäure eingesetzt wird.

8. Entschäumerformulierungen nach einem der Ansprüche 1 bis 7, **dadurch gekennzeichnet, dass** sie als weitere Bestandteile gegebenenfalls
(6) Polyorganosiloxane der allgemeinen Formel
R⁵R₂SiO (SiR₂O)ₘSiR₂R⁵ (VIIa)
oder 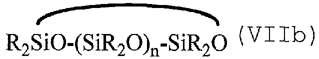 wobei
R gleich oder verschieden sein kann und die oben dafür angegebene Bedeutung hat,
R⁵ gleich oder verschieden sein kann und R oder -OR⁶ sein kann, wobei
R⁶ ein Wasserstoffatom oder einen einwertigen, gegebenenfalls substituierten Kohlenwasserstoffrest mit 1 bis 25 C-Atomen bedeutet,
m eine ganze Zahl ist, vorzugsweise von 1 bis 2500 ist,
n eine ganze Zahl ist, vorzugsweise von 2 bis 20 ist, wobei die Polyorganosiloxane auch geringe Anteile an Verzweigungen, vorzugsweise T-Einheiten (R⁵SiO_{3/2}) und Q-Einheiten (SiO₂), enthalten können, gegebenenfalls
(7) wasserunlösliche organische Verbindungen, gegebenenfalls
(8) polyethermodifizierte Polysiloxane, welche linear oder verzweigt sein können und mindestens eine Polyethergruppe enthalten
und gegebenenfalls
(9) alkalische oder saure Katalysatoren oder deren
Umsetzungsprodukte mit den Komponenten (1) bis (8), enthalten.

9. Entschäumerformulierungen nach einem der Ansprüche 1 bis 8, **dadurch gekennzeichnet, dass** als Organopolysiloxanharze (3) MQ-Harze aus Einheiten der Formeln
SiO₂ (Q-Einheiten) und
R²₃SiO_{1/2} (M-Einheiten),
eingesetzt werden, wobei
R² und R³ die in Anspruch 1 dafür angegebene Bedeutung haben, das molare Verhältnis von M- zu Q-Einheiten dabei vorzugsweise im Bereich von 0,5 bis 2,0 liegt, die MQ-Harze neben den M- und Q-Einheiten gegebenenfalls noch geringe Mengen an R²SiO_{3/2} oder (R³O) SiO_{3/2} (T)-Einheiten oder R²₂SiO_{2/2} (D)-Einheiten, in Mengen von vorzugsweise 0,01 bis 20 Mol%, bezogen auf die Summe aller Siloxaneinheiten, enthalten und die MQ-Harze bis zu 10 Gew.-% freie Si-gebundene Hydroxyoder Alkoxygruppen enthalten können.

10. Entschäumerformulierungen nach einem der Ansprüche 8 bis 9,
**dadurch gekennzeichnet, dass** als wasserunlösliche organische Verbindungen (7) solche mit einem Siedepunkt größer als 100°C bei 900 bis 1100 hPa, insbesondere solche ausgewählt aus Mineralölen, nativen Ölen, Isoparaffinen, Polyisobutylenen, Rückständen aus der Oxoalkoholsynthese, Estern niedermolekularer synthetischer Carbonsäuren, Fettsäureestern, Fettalkoholen, Ethern niedermolekularer Alkohole, Phthalaten, Estern der Phosphorsäure und Wachsen, eingesetzt werden.

11. Emulsionen von Entschäumerformulierungen enthaltend
Entschäumerformulierungen nach einem der Ansprüche 1 bis 10 Emulgatoren und
Wasser.

12. Pulver enthaltend
Entschäumerformulierungen nach einem der Ansprüche 1 bis 10 und Trägermaterialien.

13. Wasch- oder Reinigungsmittel enthaltend
Entschäumerformulierungen nach einem der Ansprüche 1 bis 10 oder deren Emulsionen nach Anspruch 11 oder deren Pulver nach Anspruch 12.

14. Verfahren zum Entschäumen und/oder zur Verhinderung des Schäumens von Medien, indem die Entschäumerformulierungen nach einem der Ansprüche 1 bis 10 oder deren Emulsionen nach Anspruch 11 oder deren Pulver nach Anspruch 12 mit den Medien vermischt werden.

15. Verfahren nach Anspruch 14, **dadurch gekennzeichnet, dass** bei der Zellstoffherstellung anfallende wässrige Medien eingesetzt werden.

## Claims

1. Defoamer formulations containing:
(1) organopolysiloxanes containing per molecule at least one structural unit of general formula
O_{1/2}R₂Si-Y-SiRO_{2/2} (I)
and at least 2 units of general formula
R¹R²SiO_{1/2} (II)
and units of general formula
R₂SiO_{2/2} (III),
wherein
R may be identical or different and represents a monovalent SiC-bonded hydrocarbon radical having 1 to 30 carbon atoms which may contain one or more nonadjacent oxygen atoms and which is free from aliphatic carbon-carbon multiple bonds and
R¹ is R or an alkenyl radical having 2 to 30 carbon atoms, preferably a methyl radical or a vinyl radical, wherein at least one alkenyl radical per molecule is present,
Y represents a divalent hydrocarbon radical having 2 to 30 carbon atoms,
with the proviso that the organopolysiloxane contains a structural element of formula
R₂Y²SiO- (SiR₂O)ₓ₁-SiRY¹O- (SiR₂O) ₓ₂-SiR₂R¹ (IV)
, wherein
R and R¹ are as defined above,
Y¹ represents a divalent hydrocarbon radical having 2 to 30 carbon atoms which is bonded to a group having the formula SiR₂O_{1/2},
Y² represents a divalent hydrocarbon radical having 2 to 30 carbon atoms which is bonded to a group having the formula SiRO_{2/2}, and
x₁ and x₂ are 0 or an integer,
with the proviso that the sum of x₁+x₂ is x, wherein x is on average more than 5, preferably more than 10, and less than 100, preferably less than 80, by preference less than 60,
(2) fillers,
(3) organopolysiloxane resins composed of units of general formula
R²ₑ (R³O) _{f}SiO_{(4-e-f)/2} (V),
wherein
R² may be identical or different and represents a hydrogen atom or a monovalent, optionally substituted, SiC-bonded hydrocarbon radical having 1 to 30 carbon atoms,
R³ may be identical or different and represents a hydrogen atom or a monovalent, optionally substituted hydrocarbon radical having 1 to 4 carbon atoms,
e is 0, 1, 2, or 3 and
f is 0, 1, 2, or 3,
with the proviso that the sum of e+f is not more than 3 and that the sum of e+f is 2 in less than 50% of all units of formula (V) in the organopolysiloxane resin,
(4) polyethylene oxide-containing surfactants, and
(5) inorganic or organic acids.

2. Defoamer formulations according to Claim 1, **characterized in that** Y and Y¹ and Y² are each a radical of formula -CH₂CH₂-.

3. Defoamer formulations according to Claim 1, **characterized in that** the organopolysiloxanes (1) are produced when
(A) oligomeric or polymeric organosilicon compounds containing units of general formula
R¹R₂SiO_{1/2} (II),
units of general formula
R₂SiO_{2/2} (III),
and units of general formula
HRSiO_{2/2} (VIII)
wherein
R and R¹ are as defined in Claim 1,
with the proviso that
at least one alkenyl radical R¹ per molecule is present,
the sum of the units HRSiO_{2/2} und R¹R₂SiO_{1/2} is on average greater than 2.0,
and the number of alkenyl radicals R¹ is on average greater than the number of Si-bonded hydrogen atoms
and optionally
(B) oligomeric or polymeric organosilicon compounds containing units of general formula
R⁷R₂SiO_{1/2} (IX)
and
units of general formula
R₂SiO_{2/2} (III)
,
wherein
R is as defined in Claim 1, and
R⁷ is an alkenyl radical having 2 to 30 carbon atoms, preferably a vinyl radical,
are reacted in the presence of
(C) catalysts which promote the addition of Si-bonded hydrogen onto aliphatic double bonds,
wherein the employed ratio of aliphatic double bond in the components (A) and optionally (B) to Si-bonded hydrogen in the component (A) is 1.2 to 10, preferably 1.5 to 5.0, by preference 1.7 to 3.0.

4. Defoamer formulations according to Claim 3, **characterized in that** the organosilicon compounds (A) employed are those of the formula
R¹R₂SiO- (SiR₂O) ₓ- (HSiR) y-O-SiR₂R¹ (X)
,
wherein
R, R¹ and x are as defined in Claim 1,
and y is on average at least 0.5, preferably at least 0.6, particularly preferably at least 0.7, and on average at most 1.5, preferably at most 1.2 and particularly preferably at most 1.0,
with the proviso that at least one alkenyl radical R¹ per molecule is present,
the sum of the units HRSiO_{2/2} und R¹R₂SiO_{1/2} is on average greater than 2.0,
and the number of alkenyl radicals R¹ is on average greater than the number of Si-bonded hydrogen atoms.

5. Defoamer formulations according to Claim 3 or 4, **characterized in that** the organosilicon compounds (B) employed are those of formula
R⁷R₂SiO- (SiR₂O) _{z}-O-SiR₂R⁷ (XI)
, wherein
R and R⁷ are as defined in Claim 3 and
z is on average more than 5, preferably more than 10, and less than 1000, preferably less than 500, particularly preferably less than 250.

6. Defoamer formulations according to any of Claims 1 to 5, **characterized in that** the polyethylene oxide-containing surfactants (4) used are alkyl polyglycol ethers of the formula
R⁴- [O-CH₂-CH₂]ₙ-OH (VI)
,
in which
R⁴ is a monovalent hydrocarbon radical having 1 to 30 carbon atoms, preferably 4 to 30 carbon atoms, especially 10 to 20 carbon atoms and
n has integer values between 1 and 100, preferably between 3 and 20, by preference between 3 and 10.

7. Defoamer formulations according to any of Claims 1 to 6, **characterized in that** the acid (5) used is phosphoric acid.

8. Defoamer formulations according to any of Claims 1 to 7, **characterized in that** they contain as further constituents
optionally
(6) polyorganosiloxanes of general formula
R⁵R₂SiO (SiR₂O)ₘSiR₂R⁵ (VIIa)
or 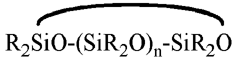 (VIIb) wherein
R may be identical or different and is as defined above,
R⁵ may be identical or different and may be R or -OR⁶, wherein
R⁶ represents a hydrogen atom or a monovalent, optionally substituted hydrocarbon radical having 1 to 25 carbon atoms,
m is an integer, preferably from 1 to 2500,
n is an integer, preferably from 2 to 20, wherein the polyorganosiloxanes may also contain small proportions of branchings, preferably T units (R⁵SiO_{3/2}) and Q units (SiO₂), optionally
(7) water-insoluble organic compounds,
optionally
(8) polyether-modified polysiloxanes which may be linear or branched and contain at least one polyether group and optionally
(9) alkaline or acidic catalysts or their reaction products with the components (1) to (8).

9. Defoamer formulations according to any of Claims 1 to 8, **characterized in that** the organopolysiloxane resins (3) employed are MQ resins composed of units of formulae
SiO₂ (Q units) and
R²₃SiO_{1/2} (M units),
wherein
R² and R³ are as defined in Claim 1, the molar ratio of M units to Q units here is preferably in the range from 0.5 to 2.0, the MQ resins optionally also contain, in addition to the M units and Q units, small amounts of R²SiO_{3/2} or (R³O) SiO_{3/2} (T) units or R²₂SiO_{2/2} (D) units in amounts of preferably 0.01 to 20 mol%, based on the sum of all siloxane units, and the MQ resins may contain up to 10% by weight of free Si-bonded hydroxyl or alkoxy groups.

10. Defoamer formulations according to any of Claims 8 to 9, **characterized in that** the water-insoluble organic compounds (7) used are those having a boiling point greater than 100°C at 900 to 1100 hPa, especially those selected from mineral oils, natural oils, isoparaffins, polyisobutylenes, residues from oxo alcohol synthesis, esters of low molecular weight synthetic carboxylic acids, fatty acid esters, fatty alcohols, ethers of low molecular weight alcohols, phthalates, esters of phosphoric acid and waxes.

11. Emulsions of defoamer formulations containing defoamer formulations according to any of Claims 1 to 10,
emulsifiers and
water.

12. Powders containing
defoamer formulations according to any of Claims 1 to 10 and support materials.

13. Washing or cleaning compositions containing defoamer formulations according to any of Claims 1 to 10 or emulsions thereof according to Claim 11 or powders thereof according to Claim 12.

14. Process for defoaming and/or preventing foaming of media by mixing the defoamer formulations according to any of Claims 1 to 10 or emulsions thereof according to Claim 11 or powders thereof according to Claim 12 with the media.

15. Process according to Claim 14, **characterized in that** aqueous media generated in chemical pulp production are employed.

## Revendications

1. Formulations antimoussantes contenant :
(1) des organopolysiloxanes contenant par molécule au moins un motif structural de formule générale
O_{1/2}R₂Si-Y-SiRO_{2/2} (I)
et au moins 2 motifs de formule générale
R¹R₂SiO_{1/2} (II)
et des motifs de formule générale
R₂SiO_{2/2} (III)
,
dans lesquelles
R peut être identique ou différent et représente un radical hydrocarboné monovalent lié à SiC ayant 1 à 30 atomes de carbone, qui peut contenir un ou plusieurs atomes d'oxygène séparés les uns des autres et qui est exempt de liaisons multiples carbone-carbone aliphatiques, et
R¹ est identique à R ou représente un radical alcényle ayant 2 à 30 atomes de carbone, de préférence un radical méthyle ou vinyle, au moins un radical alcényle étant présent par molécule, Y représente un radical hydrocarboné divalent ayant 2 à 30 atomes de carbone,
à la condition que l'organopolysiloxane contienne un élément structural de formule
R₂Y²SiO- (SiR₂O) ₓ₁-SiRY¹O- (SiR₂O) ₓ₂-SiR₂R¹ (IV)
dans laquelle
R et R¹ ont les significations qui leur sont données ci-dessus,
Y¹ représente un radical hydrocarboné divalent
ayant 2 à 30 atomes de carbone, qui est lié à un groupe de formule SiR₂O_{1/2},
Y² représente un radical hydrocarboné divalent
ayant 2 à 30 atomes de carbone, qui est lié à un groupe de formule SiRO_{2/2} et
x₁ et x₂ représentent 0 ou un nombre entier,
à la condition que la somme x₁ + x₂ = x,
x étant en moyenne supérieur à 5, de préférence supérieur à 10, et inférieur à 100, de préférence inférieur à 80, de préférence inférieur à 60,
(2) des charges,
(3) des résines d'organopolysiloxane constituées de motifs de formule générale
R²ₑ (R³O) _{f}SiO_{(4-e-f)/2} (V),
dans laquelle
R² peut être identique ou différent et représente un atome de carbone ou un radical hydrocarboné monovalent, éventuellement substitué, lié à SiC, ayant 1 à 30 atomes de carbone,
R³ peut être identique ou différent et représente un atome d'hydrogène ou un radical hydrocarboné monovalent, éventuellement substitué, ayant 1 à 4 atomes de carbone,
e représente 0, 1, 2 ou 3 et f représente 0, 1, 2 ou 3, à la condition que la somme e + f soit inférieure ou égale à 3, et que, dans moins de 50 % de tous les motifs de formule (V), la somme e + f dans la résine d'organopolysiloxane soit égale à 2,
(4) des tensioactifs contenant du poly(oxyde d'éthylène) et
(5) des acides inorganiques ou organiques.

2. Formulations antimoussantes selon la revendication 1, **caractérisées en ce que** Y, ainsi que Y¹ et Y², représente un radical de formule -CH₂CH₂-.

3. Formulations antimoussantes selon la revendication 1, **caractérisées en ce que** les organopolysiloxanes (1) sont fabriqués par le fait que l'on fait réagir
(A) des composés organosiliciés oligomères ou polymères, qui contiennent des motifs de formule générale
R¹R₂SiO_{1/2} (II),
des motifs de formule générale
R₂SiO_{2/2} (III),
et des motifs de formule générale
HRSiO_{2/2} (VIII)
dans lesquelles
R et R¹ ont les significations qui leur sont données dans la revendication 1,
à la condition que
au moins un radical alcényle R¹ soit présent par molécule,
que la somme des motifs HRSiO_{2/2} et R¹R₂SiO_{1/2} soit en moyenne supérieure à 2,0,
et que le nombre des radicaux alcényle R¹ soit en moyenne supérieur au nombre des atomes d'hydrogène liés à Si,
et éventuellement
(B) des composés organosiliciés oligomères ou polymères, qui contiennent
des motifs de formule générale
R⁷R₂SiO_{1/2} (IX)
et
des motifs de formule générale
R₂SiO_{2/2} (III)
dans lesquelles
R a la signification qui lui est donnée dans la revendication 1 et
R⁷ représente un radical alcényle ayant 2 à 30 atomes de carbone, de préférence un radical vinyle,
en présence
(C) de catalyseurs favorisant la fixation de l'hydrogène
lié à Si à une double liaison aliphatique,
le rapport utilisé de la double liaison aliphatique des composants (A) et éventuellement (B) à l'hydrogène lié à Si dans le composant (A) étant de 1,2 à 10, de préférence de 1,5 à 5,0, de préférence de 1,7 à 3,0.

4. Formulations antimoussantes selon la revendication 3, **caractérisées en ce qu'**on utilise en tant que composés organosiliciés (A) ceux de formule
R¹R₂SiO- (SiR₂O) ₓ- (HSiR) y-O-SiR₂R¹ (X)
dans laquelle
R, R¹ et x ont les significations qui leur sont données dans la revendication 1,
et y représente en moyenne au moins 0,5, de préférence au moins 0,6, d'une manière particulièrement préférée au moins 0,7 et en moyenne au plus 1,5, de préférence au plus 1,2 et d'une manière particulièrement préférée au plus 1,0, à la condition qu'au moins un radical alcényle R¹ soit présent par molécule,
que la somme des motifs HRSiO_{2/2} et R¹R₂SiO_{1/2} soit en moyenne supérieure à 2,0,
et que le nombre des radicaux alcényle R¹ soit en moyenne supérieur au nombre des atomes d'hydrogène liés à Si.

5. Formulations antimoussantes selon la revendication 3 ou 4, **caractérisées en ce qu'**on utilise en tant que composés organosiliciés (B) ceux de formule
R⁷R₂SiO- (SiR₂O) _{z}-O-SiR₂R⁷ (XI)
dans laquelle
R et R⁷ ont les significations qui leur sont données dans la revendication 3 et
z est en moyenne supérieur à 5, de préférence supérieur à 10 et inférieur à 1 000, de préférence inférieur à 500, d'une manière particulièrement préférée inférieur à 250.

6. Formulations antimoussantes selon l'une des revendications 1 à 5, **caractérisées en ce qu'**on utilise en tant que tensioactifs (4) contenant du poly(oxyde d'éthylène) des alkylpolyglycoléthers de formule
R⁴- [O-CH₂-CH₂]ₙ-OH (VI),
dans laquelle
R⁴ représente un radical hydrocarboné monovalent ayant 1 à 30 atomes de carbone, de préférence 4 à 30 atomes de carbone, en particulier 10 à 20 atomes de carbone et
n représente un nombre entier entre 1 et 100, de préférence entre 3 et 20, préférentiellement de 3 à 10.

7. Formulations antimoussantes selon l'une des revendications 1 à 6, **caractérisées en ce qu'**on utilise en tant qu'acide (5) l'acide phosphorique.

8. Formulations antimoussantes selon l'une des revendications 1 à 7, **caractérisées en ce qu'**elles contiennent éventuellement en tant qu'autres constituants
(6) des polyorganosiloxanes de formule générale R⁵R₂SiO (SiR₂O)ₘSiR₂R⁵ (VIIa) ou 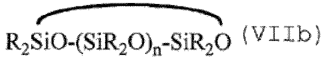 dans lesquelles
R peut être identique ou différent et a la signification qui lui est donnée ci-dessus,
R⁵ peut être identique ou différent et peut représenter R ou -OR⁶,
R⁶ représentant un atome d'hydrogène ou un radical hydrocarboné monovalent éventuellement substitué ayant 1 à 25 atomes de carbone,
m représentant un nombre entier, de préférence de 1 à 2 500,
n représentant un nombre entier, de préférence de 2 à 20,
les polyorganosiloxanes pouvant aussi contenir de faibles proportions de ramifications, de préférence des motifs T (R⁵SiO_{3/2}) et des motifs Q (SiO₂), éventuellement
(7) des composés organiques insolubles dans l'eau, éventuellement
(8) des polysiloxanes modifiés par un polyéther, qui peuvent être linéaires ou ramifiés et contiennent au moins un groupe polyéther
et éventuellement
(9) des catalyseurs alcalins ou acides ou leurs produits de réaction avec les composants (1) à (8).

9. Formulations antimoussantes selon l'une des revendications 1 à 8, **caractérisées en ce qu'**on utilise en tant que résines d'organopolysiloxane (3) des résines MQ constituées de motifs de formules
SiO₂ (motifs Q) et
R²₃SiO_{1/2} (motifs M),
dans lesquelles
R² et R³ ont les significations qui leur sont données dans la revendication 1, le rapport en moles des motifs M aux motifs Q étant alors de préférence dans la plage de 0,5 à 2,0, les résines MQ contenant, outre les motifs M et Q, éventuellement encore de faibles quantités de motifs (T) R²SiO_{3/2} ou (R³O) SiO_{3/2} ou de motifs (D) R²₂SiO_{2/2}, en des quantités de préférence de 0,01 à 20 % en moles par rapport à la somme de tous les motifs siloxane, et les résines MQ pouvant contenir jusqu'à 10 % en poids de groupes hydroxy ou alcoxy libres liés à Si.

10. Formulations antimoussantes selon l'une des revendications 8 à 9, **caractérisées en ce qu'**on utilise en tant que composés organiques solubles dans l'eau (7) ceux ayant un point d'ébullition supérieur à 100 °C sous 900 à 1 100 hPa, en particulier ceux qui sont choisis parmi les huiles minérales, les huiles natives, les isoparaffines, les polyisobutylènes, les résidus de la synthèse des oxoalcools, les esters d'acides carboxyliques synthétiques à faible masse moléculaire, les esters d'acides gras, les alcools gras, les éthers d'alcools à faible masse moléculaire, les phtalates, les esters de l'acide phosphorique et les cires.

11. Émulsions de formulations antimoussantes contenant des formulations antimoussantes selon l'une des revendications 1 à 10, des émulsifiants, et
de l'eau.

12. Poudre contenant
des formulations antimoussantes selon l'une des revendications 1 à 10 et des matériaux supports.

13. Produit lavant ou détergent contenant des formulations antimoussantes selon l'une des revendications 1 à 10 ou leurs émulsions selon la revendication 11 ou leur poudre selon la revendication 12.

14. Procédé pour éliminer la mousse et/ou empêcher le moussage de milieux, dans lequel des formulations antimoussantes selon l'une des revendications 1 à 10 ou leurs émulsions selon la revendication 11 ou leur poudre selon la revendication 12 sont mélangées aux milieux.

15. Procédé selon la revendication 14, **caractérisé en ce qu'**on utilise des milieux aqueux qui sont produits lors de la fabrication de la cellulose.
